# EUROPEAN PATENT APPLICATION

(11) **EP 4 783 641 A1**
(43) Date of publication of application: **29.07.2026**
(21) Application number: 24870846.3
(22) Date of filing: 26.09.2024
(51) Int. Cl.: H04W 24/00

(54) **SENSING METHOD AND COMMUNICATION APPARATUS**

(30) Priority: 28.09.2023 CN 202311294135
(71) Applicant: HUAWEI TECHNOLOGIES CO., LTD., Shenzhen 518129 (CN)
(72) Inventor: WANG, Wei, Nanjing, Jiangsu 210093 (CN); NAREN, Gerile, Shenzhen, Guangdong 518129 (CN); DU, Rui, Shenzhen, Guangdong 518129 (CN)
(74) Representative: Goddar, Heinz J.
(86) International application number: PCT/CN2024/121313
(87) International publication number: WO 2025/067303

(57) **Abstract**

This application provides a sensing method. In the method, a first STA mainly controls a supplementary measurement of a first link between a second STA as a source node and the first STA as a destination node. When the first STA determines that the supplementary measurement needs to be performed on the first link, the first STA sends a first notification message to the second STA, to notify the second STA to initiate the supplementary measurement of the first link. Compared with a method in which an AP mainly controls the supplementary measurement of the first link, in this method, the first STA does not need to send a corresponding CSI measurement result to the AP after each measurement of a data packet of the second STA. This can reduce channel occupation during a sensing measurement, and further reduce interference caused by sensing to data communication.

## Description

This application claims priority to Chinese Patent Application No. 202311294135.9, filed with the China National Intellectual Property Administration on September 28, 2023 and entitled "SENSING METHOD AND COMMUNICATION APPARATUS", which is incorporated herein by reference in its entirety.

### TECHNICAL FIELD

This application relates to the field of wireless communication, and specifically, to a sensing method and a communication apparatus.

### BACKGROUND

Currently, when a non-access point station (non-access point station, non-AP STA) (referred to as a STA for short below) performs an opportunistic measurement on a wireless communication link that uses the STA as a destination node, the STA performs a channel state information (channel state information, CSI) measurement based on a data packet from a STA #2, and notifies an access point (access point, AP) of a measured CSI measurement result, and the AP determines whether to initiate a supplementary measurement of the wireless communication link, where the opportunistic measurement refers to a sensing measurement manner of performing the CSI measurement by using the data packet, and the supplementary measurement refers to a sensing measurement manner of performing the CSI measurement by using some specific measurement packets.

Generally, a measurement frequency for the sensing measurement on the wireless link is high. For example, if 10 CSI measurements need to be performed per second, a STA #1 needs to occupy a channel 10 times per second to feed back CSI measurement results to the AP, and a quantity of channel occupation times is large, causing stronger interference to normal data communication.

### SUMMARY

This application provides a sensing method, to reduce channel occupation during a sensing measurement, thereby reducing interference caused by sensing to data communication.

According to a first aspect, a sensing method is provided. The method may be performed by a first STA, or may be performed by a component (for example, a chip or a circuit) of the first STA. This is not limited. For ease of description, the following uses an example in which the method is performed by the first STA for description.

The method includes: The first STA determines that a supplementary measurement needs to be performed on a first link, where the first link is a link that uses a second STA as a source node and the first STA as a destination node, and the supplementary measurement is a measurement manner of performing sensing by using a dedicated measurement packet; and the first STA sends a first notification message to the second STA, where the first notification message is for notifying the second STA to initiate the supplementary measurement of the first link.

In the foregoing technical solution, the first STA mainly controls the supplementary measurement of the first link. Compared with a technical solution in which an AP mainly controls the supplementary measurement of the first link, in this technical solution, the first STA does not need to send a corresponding CSI measurement result to the AP after each measurement of a data packet of the second STA. This can reduce channel occupation, and further reduce interference to data communication.

With reference to the first aspect, in some implementations of the first aspect, the first STA determines, based on a first condition, that the supplementary measurement needs to be performed on the first link. The first condition includes: The first STA is incapable of performing an opportunistic measurement on the first link, and the opportunistic measurement is a measurement manner of performing sensing by using a data packet; or a measurement requirement of the first link is unable to be met when the first STA performs an opportunistic measurement on the first link; or the first STA determines that a variation amplitude of a first channel state information CSI measurement result is greater than a predefined CSI variation threshold, and the first CSI measurement result is a CSI measurement result obtained by the first STA by measuring a received data packet of the second STA.

In the foregoing technical solution, after finding a CSI variation, the STA directly initiates the supplementary measurement, reducing a process of measurement reporting to the AP, and more quickly responding to the CSI variation, thereby effectively obtaining a fine-grained and real-time measurement result for use in a subsequent application.

With reference to the first aspect, in some implementations of the first aspect, that the first STA is incapable of performing the opportunistic measurement on the first link includes: The first STA has not received a data packet from the second STA, or the first STA is incapable of measuring a data packet from the second STA.

With reference to the first aspect, in some implementations of the first aspect, that the first STA determines that the measurement requirement of the first link is unable to be met when the first STA performs the opportunistic measurement on the first link includes: A frequency at which the first STA receives a data packet of the second STA is less than a first measurement frequency, and the first measurement frequency is a reference frequency for the first STA to perform the opportunistic measurement.

With reference to the first aspect, in some implementations of the first aspect, that the first STA determines that the supplementary measurement needs to be performed on the first link when the first STA determines that the variation amplitude of the first CSI measurement result is greater than the CSI variation threshold includes: The first STA determines that the variation amplitude of the first CSI measurement result is greater than the CSI variation threshold, and needs to measure the first link at a first frequency greater than a first measurement frequency, and the first measurement frequency is a reference frequency for the first STA to perform the opportunistic measurement; and when a frequency at which the first STA sends a data packet is less than the first measurement frequency, the first STA determines that the supplementary measurement needs to be performed on the first link.

With reference to the first aspect, in some implementations of the first aspect, the first notification message includes timer information and measurement link information, the timer information indicates first duration, the measurement link information indicates the first link, and the first timer duration indicates the second STA to initiate the supplementary measurement of the first link after the first duration expires.

With reference to the first aspect, in some implementations of the first aspect, the dedicated measurement packet is a null data packet NDP, and the method further includes: The first STA receives a null data packet announcement NDPA packet from the second STA at an interval of the first duration; and the first STA receives the NDP from the second STA after receiving the NDPA.

With reference to the first aspect, in some implementations of the first aspect, the method further includes: The first STA receives a first sensing measurement request message from a first access point AP, where the first sensing measurement request message includes first indication information, and the first indication information indicates the first STA to mainly control the supplementary measurement.

With reference to the first aspect, in some implementations of the first aspect, the first sensing measurement request message further includes the measurement link information, and the measurement link information indicates the first link.

With reference to the first aspect, in some implementations of the first aspect, the first sensing measurement request message further includes the first measurement frequency, a second measurement frequency, a channel state information CSI variation threshold, and a first time interval, the first measurement frequency is the reference frequency for the first STA to perform the opportunistic measurement, the second measurement frequency is a reference frequency for the first STA to perform the supplementary measurement, and the first time interval is a time interval between two consecutive times of sending a measurement report message to the first AP when a variation amplitude of a CSI measurement result corresponding to the first link does not exceed the CSI variation threshold.

According to a second aspect, a sensing method is provided. The method may be performed by a second STA, or may be performed by a component (for example, a chip or a circuit) of the second STA. This is not limited. For ease of description, the following uses an example in which the method is performed by the second STA for description.

The method includes: The second STA receives a first notification message from a first STA, where the first notification message is for notifying the second STA to initiate a supplementary measurement of a first link, the first link is a link that uses the second STA as a source node and the first STA as a destination node, and the supplementary measurement is a measurement manner of performing sensing by using a dedicated measurement packet; and the second STA initiates the supplementary measurement of the first link.

For beneficial effect of the second aspect, refer to the descriptions of the first aspect. Details are not described herein again.

With reference to the second aspect, in some implementations of the second aspect, the first notification message includes timer information and measurement link information, the timer information indicates first duration, the measurement link information indicates the first link, and the first timer duration indicates the second STA to initiate the supplementary measurement of the first link after the first duration expires.

With reference to the second aspect, in some implementations of the second aspect, the dedicated measurement packet is a null data packet NDP, and that the second STA initiates the supplementary measurement of the first link includes: The second STA sends a null data packet announcement NDPA packet to the first STA at an interval of the first duration; and the second STA sends the NDP to the first STA after sending the NDPA.

According to a third aspect, a sensing method is provided. The method may be performed by a first STA, or may be performed by a component (for example, a chip or a circuit) of the first STA. This is not limited. For ease of description, the following uses an example in which the method is performed by the first STA for description.

The method includes: The first STA sends a first measurement report message to a first access point AP, where the first measurement report message indicates that the first STA is incapable of measuring a first link, and the first link is a link that uses a second STA as a source node and the first STA as a destination node; and the first STA receives a second sensing measurement request message from the first AP, where the second sensing measurement request message is for requesting the first STA to perform a sensing measurement on a second link, and the second link is a link that uses a third STA as a source node and the first STA as a destination node.

In the foregoing technical solution, a mechanism for feeding back an error to the AP is provided for the STA, thereby freeing the AP from a task that needs to continuously monitor a specific measurement procedure between STAs. This mechanism provides support for a STA autonomous measurement, and improves reliability of an opportunistic measurement.

With reference to the third aspect, in some implementations of the third aspect, the first measurement report message includes measurement link information and error report information, the measurement link information indicates the first link, and the error report information indicates that the first STA is incapable of measuring the first link.

With reference to the third aspect, in some implementations of the third aspect, the first measurement report message further includes error cause information, and the error cause information indicates an error cause for which the first STA is incapable of measuring the first link.

For example, the error cause is that the second STA has no response.

With reference to the third aspect, in some implementations of the third aspect, that the first STA performs the sensing measurement on the second link includes performing an opportunistic measurement on the second link, and the opportunistic measurement is a measurement manner of performing sensing by using a data packet.

With reference to the third aspect, in some implementations of the third aspect, the method further includes: The first STA determines that a supplementary measurement needs to be performed on the second link; and the first STA sends a second notification message to the third STA, where the second notification message is for notifying the third STA to initiate the supplementary measurement of the second link, and the supplementary measurement is a measurement manner of performing sensing by using a dedicated measurement packet.

With reference to the third aspect, in some implementations of the third aspect, the second sensing measurement request message includes measurement link information, and the measurement link information indicates the second link.

With reference to the third aspect, in some implementations of the third aspect, the second sensing measurement request message further includes a measurement parameter for the first STA to perform the sensing measurement on the second link.

According to a fourth aspect, a sensing method is provided. The method may be performed by a first AP, or may be performed by a component (for example, a chip or a circuit) of the first AP. This is not limited. For ease of description, the following uses an example in which the method is performed by the first AP for description.

The method includes: The first AP receives a first measurement report message from a first station STA, where the first measurement report message indicates that the first STA is incapable of measuring a first link, and the first link is a link that uses a second STA as a source node and the first STA as a destination node; and the first AP sends a second sensing measurement request message to the first STA, where the second sensing measurement request message is for requesting the first STA to perform a sensing measurement on a second link, and the second link is a link that uses a third STA as a source node and the first STA as a destination node.

For beneficial effect of the fourth aspect, refer to the descriptions of the third aspect. Details are not described herein again.

With reference to the fourth aspect, in some implementations of the fourth aspect, the first measurement report message further includes measurement link information and error report information, the measurement link information indicates the first link, and the error report information indicates that the first STA is incapable of measuring the first link.

With reference to the fourth aspect, in some implementations of the fourth aspect, the first measurement report message further includes error cause information, and the error cause information indicates an error cause for which the first STA is incapable of measuring the first link.

For example, the error cause is that the second STA has no response.

With reference to the fourth aspect, in some implementations of the fourth aspect, the second sensing measurement request message includes measurement link information, and the measurement link information indicates the second link.

With reference to the fourth aspect, in some implementations of the fourth aspect, the second sensing measurement request message further includes measurement parameters for the first STA to perform an opportunistic measurement and a supplementary measurement on the second link.

According to a fifth aspect, a sensing method is provided. The method may be performed by a first STA, or may be performed by a component (for example, a chip or a circuit) of the first STA. This is not limited. For ease of description, the following uses an example in which the method is performed by the first STA for description.

The method includes: The first station STA receives a third sensing measurement request message from a first access point AP, where the third sensing measurement request message is for requesting the first STA to perform a sensing measurement on any one of N links, destination nodes of the N links are all the first STA, and N is an integer greater than 1; and the first STA measures one of the N links.

It may be understood that, in an opportunistic measurement process, each node sends a data packet randomly. In this condition, in the method, the first STA is allowed to measure any one of a plurality of links, so that a probability of successful opportunistic measurements can be greatly improved, thereby reducing impact on data communication when a dedicated sensing measurement packet is used for the sensing measurement.

With reference to the fifth aspect, in some implementations of the fifth aspect, the third sensing measurement request message includes measurement link information and measurement type information, the measurement link information indicates the N links, and the measurement type information indicates that the first STA needs to measure only any one of the N links.

With reference to the fifth aspect, in some implementations of the fifth aspect, the one link is a first link, and the first link is a link that uses a second STA as a source node; and that the first STA measures the one of the N links includes: The first STA receives a data packet from the second STA based on a first measurement frequency, where the first measurement frequency is a reference frequency for the first STA to perform an opportunistic measurement, and the opportunistic measurement is a measurement manner of performing sensing by using a data packet; and the first STA performs a channel state information CSI measurement based on the data packet of the second STA.

With reference to the fifth aspect, in some implementations of the fifth aspect, the N links include a second link, the second link is a link that uses a third STA as a source node, and the method further includes: The first STA receives a first dedicated measurement packet from the third STA, where the first dedicated measurement packet is a measurement packet used for a supplementary measurement, and the first dedicated measurement packet is used by the first STA to perform the supplementary measurement on the second link; and the first STA sends a first notification message to the third STA, where the first notification message is for notifying the third STA that the supplementary measurement of the second link does not need to be initiated.

In the foregoing technical solution, for the third STA that has no data packet to be sent, the first STA may suppress, through the first notification message, the third STA from continuing to send a supplementary measurement message subsequently, thereby reducing sending of redundant measurement packets.

According to a sixth aspect, a sensing method is provided. The method may be performed by a first AP, or may be performed by a component (for example, a chip or a circuit) of the first AP. This is not limited. For ease of description, the following uses an example in which the method is performed by the first AP for description.

The method includes: The first access point AP determines a third sensing measurement request message, where the third sensing measurement request message is for requesting a first station STA to perform a sensing measurement on any one of N links, destination nodes of the N links are all the first STA, and N is an integer greater than 1; and the first AP sends the third sensing measurement request message to the first STA.

For beneficial effect of the sixth aspect, refer to descriptions of the fifth aspect. Details are not described herein again.

With reference to the sixth aspect, in some implementations of the sixth aspect, the third sensing measurement request message includes measurement link information and measurement type information, the measurement link information indicates the N links, and the measurement type information indicates that the first STA needs to measure only any one of the N links.

According to a seventh aspect, a communication apparatus is provided. The communication apparatus is configured to perform the method according to any one of the first aspect to the sixth aspect. Specifically, the communication apparatus may include a unit and/or module configured to perform the method according to any one of the first aspect or the implementations of the first aspect, or include a unit and/or module configured to perform the method according to any one of the second aspect or the implementations of the second aspect, or include a unit and/or module configured to perform the method according to any one of the third aspect or the implementations of the third aspect, or include a unit and/or module configured to perform the method according to any one of the fourth aspect or the implementations of the fourth aspect, or include a unit and/or module configured to perform the method according to any one of the fifth aspect or the implementations of the fifth aspect, or include a unit and/or module configured to perform the method according to any one of the sixth aspect or the implementations of the sixth aspect, for example, a processing unit and/or a transceiver unit.

In an implementation, the communication apparatus is a device (for example, a first STA, a second STA, or a first AP). When the communication apparatus is the device, the transceiver unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip, a chip system, or a circuit used in a device (for example, a first STA, a second STA, or a first AP). When the communication apparatus is the chip, the chip system, or the circuit used in the device, the transceiver unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to an eighth aspect, a communication apparatus is provided. The apparatus includes: a memory, configured to store a program; and at least one processor, configured to execute a computer program or instructions stored in the memory, to perform the method according to any one of the first aspect or the implementations of the first aspect, or perform the method according to any one of the second aspect or the implementations of the second aspect, or perform the method according to any one of the third aspect or the implementations of the third aspect, or perform the method according to any one of the fourth aspect or the implementations of the fourth aspect, or perform the method according to any one of the fifth aspect or the implementations of the fifth aspect, or perform the method according to any one of the sixth aspect or the implementations of the sixth aspect.

In an implementation, the communication apparatus is a device (for example, a first STA, a second STA, or a first AP).

In another implementation, the apparatus is a chip, a chip system, or a circuit used in a device (for example, a first STA, a second STA, or a first AP).

According to a ninth aspect, this application provides a processor, configured to perform the methods according to the foregoing aspects.

Operations such as sending and obtaining/receiving related to the processor may be understood as operations such as outputting and receiving or inputting of the processor, or may be understood as sending and receiving operations performed by a radio frequency circuit and an antenna, unless otherwise specified, or provided that the operations do not contradict actual functions or internal logic of the operations in related descriptions. This is not limited in this application.

According to a tenth aspect, a computer-readable storage medium is provided. The computer-readable medium stores program code executed by a device. The program code includes instructions used to perform the method according to the first aspect or any one of the implementations of the first aspect, or includes instructions used to perform the method according to the second aspect or any one of the implementations of the second aspect, or includes instructions used to perform the method according to the third aspect or any one of the implementations of the third aspect, or includes instructions used to perform the method according to the fourth aspect or any one of the implementations of the fourth aspect, or includes instructions used to perform the method according to the fifth aspect or any one of the implementations of the fifth aspect, or includes instructions used to perform the method according to the sixth aspect or any one of the implementations of the sixth aspect.

According to an eleventh aspect, a computer program product including instructions is provided. When the computer program product runs on a computer, the computer is enabled to perform the method according to the first aspect or any one of the implementations of the first aspect, or the computer is enabled to perform the method according to the second aspect or any one of the implementations of the second aspect, or the computer is enabled to perform the method according to the third aspect or any one of the implementations of the third aspect, or the computer is enabled to perform the method according to the fourth aspect or any one of the implementations of the fourth aspect, the computer is enabled to perform the method according to the fifth aspect or any one of the implementations of the fifth aspect, or the computer is enabled to perform the method according to the sixth aspect or any one of the implementations of the sixth aspect.

According to a twelfth aspect, a chip is provided. The chip includes a processor and a communication interface. The processor reads, through the communication interface, instructions stored in a memory, to perform the method according to any one of the first aspect or the implementations of the first aspect, or perform the method according to any one of the second aspect or the implementations of the second aspect, or perform the method according to any one of the third aspect or the implementations of the third aspect, or perform the method according to any one of the fourth aspect or the implementations of the fourth aspect, or perform the method according to any one of the fifth aspect or the implementations of the fifth aspect, or perform the method according to any one of the sixth aspect or the implementations of the sixth aspect.

Optionally, in an implementation, the chip further includes the memory, the memory stores a computer program or instructions, and the processor is configured to execute the computer program or the instructions stored in the memory. When the computer program or the instructions are executed, the processor is configured to perform the method according to any one of the first aspect or the implementations of the first aspect, or perform the method according to any one of the second aspect or the implementations of the second aspect, or perform the method according to any one of the third aspect or the implementations of the third aspect, or perform the method according to any one of the fourth aspect or the implementations of the fourth aspect, or perform the method according to any one of the fifth aspect or the implementations of the fifth aspect, or perform the method according to any one of the sixth aspect or the implementations of the sixth aspect.

According to a thirteenth aspect, a communication system is provided, including at least one node of the foregoing first STA, second STA, and first AP.

### BRIEF DESCRIPTION OF DRAWINGS

FIG. 1 is a diagram of a network architecture of a wireless local area network applicable to an embodiment of this application;
FIG. 2 is a diagram of wireless passive sensing;
FIG. 3 is a diagram of a communication device interaction system applicable to this application;
FIG. 4 is a diagram of a method 400 for an opportunistic measurement between STAs;
FIG. 5 is a schematic flowchart of a sensing method 500 according to this application;
FIG. 6 is a diagram of a possible frame structure of a sensing measurement request message according to this application;
FIG. 7 is a diagram of a method 700 for a supplementary measurement mainly controlled by a STA according to this application;
FIG. 8 is a diagram of another method 800 for a supplementary measurement mainly controlled by a STA according to this application;
FIG. 9 is a schematic flowchart of a sensing method 900 according to this application;
FIG. 10 is a diagram of a possible frame structure of a measurement report message according to this application;
FIG. 11 is a diagram of a sensing method 1100 according to this application;
FIG. 12 is a diagram of a sensing method 1200 according to this application;
FIG. 13 is a diagram of a sensing method 1300 according to this application;
FIG. 14 is a block diagram of a communication apparatus 200 according to an embodiment of this application; and
FIG. 15 is a block diagram of a communication apparatus 300 according to an embodiment of this application.

### DESCRIPTION OF EMBODIMENTS

The following describes technical solutions of this application with reference to accompanying drawings.

Embodiments of this application may be applied to a wireless local area network (wireless local area network, WLAN). Currently, a standard used for the WLAN is the institute of electrical and electronics engineers (institute of electrical and electronics engineers, IEEE) 802.11 series. The WLAN may include a plurality of basic service sets (basic service set, BSS), and network nodes in the BSS are an AP and a non-AP STA (referred to as a STA for short below).

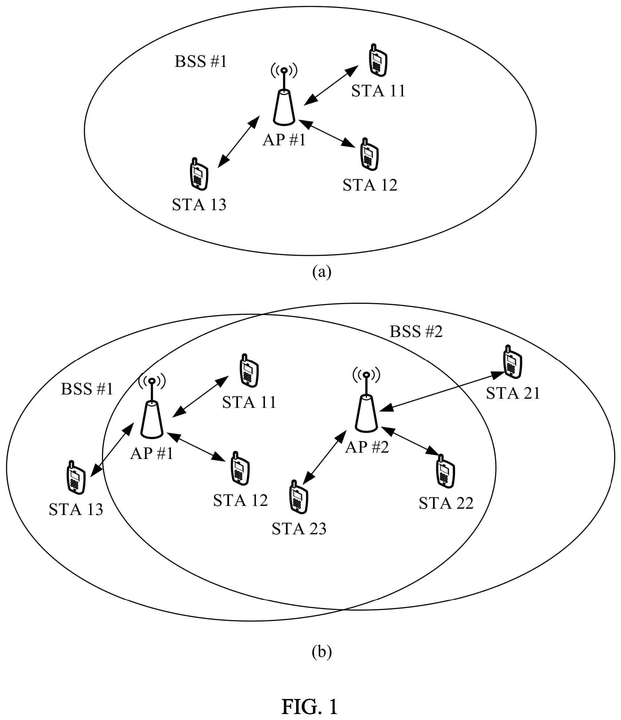

FIG. 1 is a diagram of a network architecture of a wireless local area network applicable to an embodiment of this application. As shown in (a) in FIG. 1, one BSS may include one AP and one or more STAs associated with the AP. The network architecture of the wireless local area network may alternatively include a plurality of BSSs. For example, (b) in FIG. 1 shows two BSSs, and the two BSSs partially overlap, namely, an OBSS. A BSS #1 includes an AP #1, a STA 11, a STA 12, and a STA 13, and a BSS #2 includes an AP #2, a STA 21, a STA 22, and a STA 23. The STA 11, the STA 12, the STA 22, and the STA 23 are mutually overlapping parts of the two BSSs. Each BSS includes an AP and a plurality of STAs. In one BSS, data may be transmitted between the AP and each STA. The AP #1 and the AP #2 may also communicate with each other.

The access point may be an access point used by a terminal (for example, a mobile phone) to access a wired (or wireless) network, and is mainly deployed at home, in a building, and in a campus. A typical coverage radius is dozens of meters to 100-odd meters. Certainly, the access point may alternatively be deployed outdoors. The access point is equivalent to a bridge that connects the wired network and the wireless network. A main function of the access point is to connect various wireless network clients together and then connect the wireless network to the Ethernet.

Specifically, the AP may be a terminal or a network device with a Wi-Fi chip. The network device may be a server, a router, a switch, a bridge, a computer, a mobile phone, a relay station, a vehicle-mounted device, a wearable device, a network device in a 5G network, a network device in a future 6G network, a network device in a public land mobile network (public land mobile network, PLMN), or the like. This is not limited in embodiments of this application. The access point may be a device that supports a Wi-Fi standard. For example, the access point may alternatively support one or more standards of the institute of electrical and electronics engineers (Institute of Electrical and Electronics Engineers, IEEE) 802.11 family, such as 802.11a, 802.11b, 802.11g, 802.11n, 802.11ac, 802.11ax, 802.11be, 802.11ad, and 802.11ay.

The STA may be a wireless communication chip, a wireless sensor, a wireless communication terminal, or the like, and may also be referred to as a user, user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The STA may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, an internet of things device, a wearable device, a terminal device in the 5G network, a terminal device in the future 6G network, a terminal device in the PLMN, or the like. This is not limited in embodiments of this application. The STA may be a device that supports a WLAN standard. For example, the STA may support one or more standards of the IEEE 802.11 family, such as 802.11a, 802.11b, 802.11g, 802.11n, 802.11ac, 802.11ax, 802.11be, 802.11ad, and 802.11ay.

For example, the STA may be a mobile phone, a tablet computer, a set-top box, a smart television, a smart wearable device, a vehicle-mounted communication device, a computer, an internet of things (internet of things, IoT) node, a sensor, a smart camera, a smart remote control, or a smart water/electricity meter in a smart home, and a sensor in a smart city.

The AP or the STA may include a transmitter, a receiver, a memory, a processor, and the like. The transmitter and the receiver are respectively configured to send and receive packet structures. The memory is configured to store signaling information, store a preset value agreed in advance, and the like. The processor is configured to parse the signaling information, process related data, and the like.

It should be understood that FIG. 1 is merely an example, and should not be construed as a limitation on the network architecture of the wireless local area network to which this application is applicable. For example, the network architecture may alternatively include more BSSs, and each BSS may alternatively include more STAs, or an area in which a plurality of BSSs overlap may alternatively include more STAs. This is not limited in embodiments of this application.

With development of a wireless local area network and wireless cellular technologies, various wireless communication devices have been widely deployed in people's daily life. These wireless communication devices include mobile phones, computers, wireless routers, smart home devices, wireless sensors, wireless routers, and the like. Important features of these devices are large quantities, low prices, and quite short distances from users. In a common home environment, there are more than ten or even hundreds of wireless devices around the users. In a process of performing wireless communication, these devices sense interference caused by an action of a surrounding target object to a radio wave, and sense the action of the target object by measuring such interference.

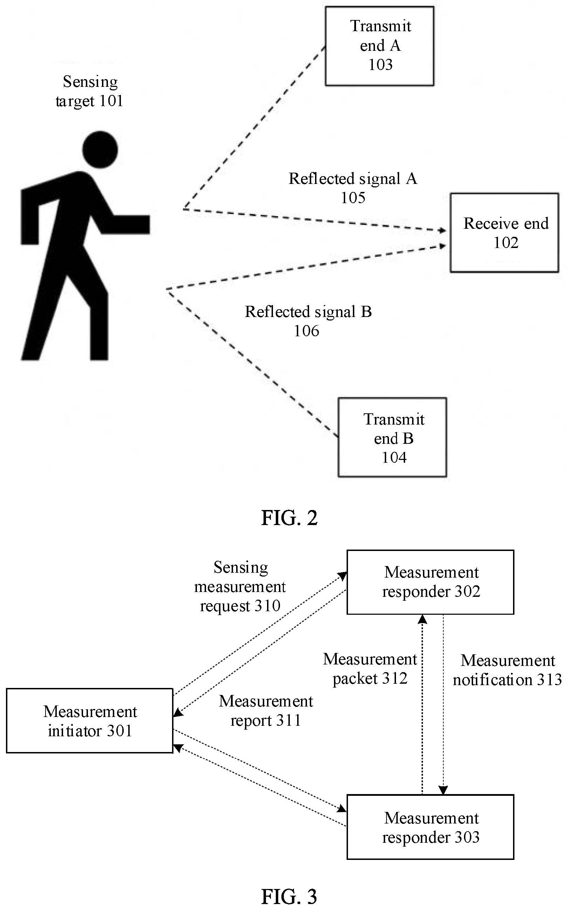

FIG. 2 is a diagram of wireless passive sensing. A main task of a wireless passive sensing system is to sense a target in one or more environments, for example, a sensing target 101 in FIG. 1. The passive sensing system generally includes one or more signal transmit ends, for example, a transmit end A (103) and a transmit end B (104) in the figure, and one or more signal receive ends, for example, a receive end 102 in the figure. A wireless signal sent by the transmit end is reflected by the sensing target 101 to form a reflected signal A (105) and a reflected signal B (106). After the reflected signal is received by the receive end 102, the receive end may sense a state of the target 101 by measuring CSI of the reflected signal. A variation of a wireless channel is represented by amplitude and phase variations of the CSI. The variation of the CSI measured at the receive end over time can be used to sense whether there is a moving target in the surrounding and a specific action that the target is performing. Therefore, the technology can be widely applied to applications such as intrusion detection, elderly care, gesture recognition, breathing and sleep monitoring, and indoor head counting.

An existing wireless passive sensing technology mainly uses a specific wireless packet, for example, a null data packet (null data packet, NDP) packet, and performs a CSI measurement on a packet by using a long training field (long training field, LTF) in the NDP to implement passive sensing. In this technical solution, each measurement of a wireless link (a wireless communication connection between a pair of sending and receiving nodes) requires one interaction between the transmit end and the receive end, and occupies the wireless channel for specific time. The wireless channel is usually used for data transmission and wireless sensing simultaneously. When wireless sensing occupies too many wireless channel resources, data communication is inevitably affected to some extent. Therefore, finding a low-cost wireless sensing solution becomes a very important part in the wireless sensing protocol design. In wireless communication, in addition to a dedicated sensing packet, another data packet usually carries a long training field, and the long training field may be used for the CSI measurement without decoding an entire packet. Therefore, the receive end may keep listening to the wireless channel, and the measurement receive end may perform the CSI measurement based on the data packet received from the transmit end. It should be noted that, a destination address of the data packet used for the CSI measurement by the measurement receive end is not necessarily an address of the measurement receive end, and the measurement receive end only needs to determine that a source address of the data packet used for the CSI measurement is an address of the transmit end and completely obtain the LTF in the packet. Currently, such a technology that uses the data packet transmitted over a wireless network for a sensing measurement is generally referred to as an opportunistic measurement.

FIG. 3 is a diagram of a communication device interaction system applicable to this application. The system includes a measurement initiator 301 and measurement responders 302 and 303. The measurement initiator is responsible for planning a measurement task and collecting a measurement result. Generally, an AP serves as the measurement initiator. In a subsequent procedure in this application, the AP represents the measurement initiator. Certainly, this application may be extended to a scenario in which the measurement initiator is not an AP or a plurality of APs coexist. The measurement responder is responsible for sending and receiving measurement packets, performing an actual measurement, and reporting a measurement result to the measurement initiator. Generally, a wireless terminal device that accesses a wireless local area network serves as the measurement responder. In a subsequent procedure in this application, a STA represents the measurement responder. As shown in FIG. 3, the measurement initiator 301 notifies the measurement responder 302 of related information about the measurement task through a sensing measurement request message 310. The measurement responder 302 sends the measurement result to the measurement initiator 301 through a measurement report message 311. The measurement responders may perform a CSI measurement by using a measurement packet 312. One party is responsible for sending the measurement packet, and may be referred to as a measurement transmit end in this application. The other party is responsible for measuring a given packet to obtain CSI, and may be referred to as a measurement receive end in this application. A wireless communication link between the measurement transmit end and the measurement receive end may be referred to as a sensing measurement link in this application. A measurement responder can serve as both the measurement transmit end and the measurement receive end in a same measurement task. Measurement responders may exchange measurement information with each other through a measurement notification (Notify) message 313.

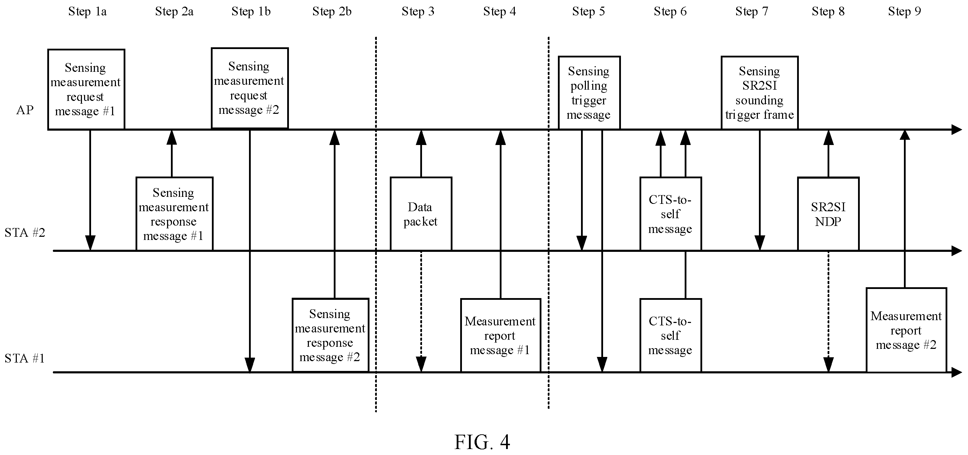

This application mainly relates to an opportunistic measurement between STAs. The following describes a specific procedure of the opportunistic measurement between the STAs with reference to FIG. 4.

FIG. 4 is a diagram of a method 400 for an opportunistic measurement between STAs. The method includes the following steps.

Step 1a: An AP determines that an opportunistic measurement needs to be performed on a link #1, where the link #1 is a link that uses a STA #2 as a source node and a STA #1 as a destination node. The AP packages a measurement requirement in a sensing measurement request (Sensing Measurement Request) message #1 and sends the sensing measurement request (Sensing Measurement Request) message #1 to the STA #1.

Step 2a: The STA #1 records a measurement requirement of a corresponding link, and the STA #1 sends a sensing measurement response (Sensing Measurement Response) message to the AP, to determine to participate in a sensing measurement.

Step 1b: The AP packages the measurement requirement in a sensing measurement request message #2 and sends the sensing measurement request message #2 to the STA #2.

Step 2b: The STA #2 records a measurement requirement of a corresponding link, and the STA #2 sends a sensing measurement response message #2 to the AP, to determine to participate in the sensing measurement.

Step 3: The STA #1 normally sends a data packet (Data Frame). For example, the STA #2 sends a data packet to the AP. In this case, based on the opportunistic measurement requirement, the STA #1 listens to the data packet sent by the STA #2, and performs a CSI measurement based on the data packet to obtain a CSI measurement result #1.

Step 4: The STA #1 sends a measurement report (Measurement Report) message #1 to the AP, where the message includes the CSI measurement result #1.

It should be noted that the opportunistic measurement process in step 3 and step 4 in the procedure may be repeated for a plurality of times. Herein, "repeated for a plurality of times" means that the STA #1 sends a measurement report message to the AP once after measuring a data packet.

Optionally, within a specified time period, if the AP has not received the measurement report message, or a quantity of data packets sent by the STA #2 is insufficient to meet a measurement frequency, the AP determines that a supplementary measurement needs to be performed on the link #1.

It should be understood that the supplementary measurement is to perform the sensing measurement by using a specific wireless packet that is a non-data packet. The supplementary measurement procedure is initiated only when the link measurement needs to be completed but the opportunistic measurement cannot be performed.

For example, the following continues to describe how to perform the supplementary measurement by using an example in which a measurement packet used for the supplementary measurement is an NDP. In this case, step 5 to step 9 are further included.

Step 5: The AP sends a sensing polling trigger (Sensing Polling Trigger) message to the STA #1 and the STA #2, to wake up the STA #1 and the STA #2 to perform the supplementary measurement on the link #1.

Step 6: The STA #1 and the STA #2 separately send a clear-to-send-to-self (CTS-to-self) message to the AP to confirm that the STA #1 and the STA #2 participate in the measurement.

Step 7: The AP sends a sensing SR2SI sounding trigger frame (Sensing SR2SI Sounding Trigger Frame) message to the STA #2, to trigger the STA #2 to send an NDP to the AP, where the SR2SI is a sensing responder to sensing initiator (sensing responder to sensing initiator).

Step 8: The STA #2 sends the SR2SI NDP to the AP. The STA #1 listens to the SR2SI NDP sent by the STA #2, and performs the CSI measurement based on the NDP, to obtain a CSI measurement result #2.

Step 9: The STA #1 sends a measurement report message #2 to the AP, where the message includes the CSI measurement result #2.

It should be noted that the supplementary measurement process in step 5 to step 9 in the procedure may be repeated for a plurality of times. Herein, "repeated for a plurality of times" means that the STA #1 sends a measurement report message to the AP once after measuring an NDP.

It can be learned that, in this procedure, because the AP mainly controls the supplementary measurement between the STAs, the STA #1 needs to notify the AP of a measurement result after each measurement, and the AP determines whether to initiate the supplementary measurement. Generally, a measurement frequency in the link measurement is high. For example, if 10 CSI measurements need to be performed per second, the STA #1 needs to occupy a channel 10 times per second to feed back CSI measurement results, and a quantity of channel occupation times is large, thereby causing stronger interference to normal data communication.

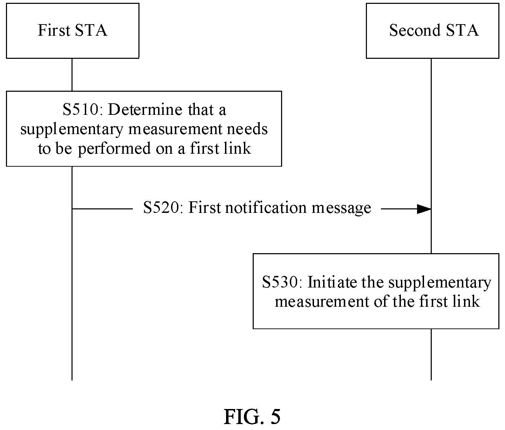

In view of this, this application provides a sensing method, to effectively resolve the foregoing technical problem. The following describes in detail the method provided in this application with reference to FIG. 5.

FIG. 5 is a schematic flowchart of a sensing method 500 according to this application. The method 500 includes the following steps.

S510: A first STA determines that a supplementary measurement needs to be performed on a first link, where the first link is a link that uses a second STA as a source node and the first STA as a destination node, and the supplementary measurement is a measurement manner of performing sensing by using a dedicated measurement packet.

The following provides several possible scenarios in which the first STA needs to perform the supplementary measurement on the first link.
(1) If the first STA is incapable of performing an opportunistic measurement on the first link, the first STA determines that the supplementary measurement needs to be performed on the first link, where the opportunistic measurement is a measurement manner of performing sensing by using a data packet.

For example, if the first STA has not received a data packet from the second STA, the first STA considers that the opportunistic measurement of the first link cannot be performed.

For example, if the first STA is incapable of measuring a data packet from the second STA, the first STA considers that the opportunistic measurement of the first link cannot be performed. Specifically, the first STA may not be able to measure the data packet from the second STA due to reasons such as sleep of the first STA, transmit end power control, and beamforming.

(2) If a measurement requirement of the first link is unable to be met when the first STA performs an opportunistic measurement on the first link, the first STA determines that the supplementary measurement needs to be performed on the first link.

For example, if a frequency at which the first STA receives a data packet of the second STA is less than a first measurement frequency, it is considered that the measurement requirement of the first link is unable to be met when the first STA performs the opportunistic measurement on the first link, where the first measurement frequency is a reference frequency for the first STA to perform the opportunistic measurement.

It should be understood that the first measurement frequency is a measurement frequency that needs to be reached when the first STA performs the opportunistic measurement on the first link. However, it should be noted that, because a frequency at which the second STA sends the data packet is determined based on data that actually needs to be sent, the frequency at which the second STA sends the data packet may be less than the first measurement frequency. In this case, the first STA may also perform the opportunistic measurement on the first link. However, the measurement requirement of the first link is unable to be met when the first STA performs the opportunistic measurement on the first link at this time.

(3) If the first STA determines that a variation amplitude of a first CSI measurement result is greater than a CSI variation threshold, the first STA determines that the supplementary measurement needs to be performed on the first link, and the first CSI measurement result is a CSI measurement result obtained by the first STA by performing the CSI measurement on a received data packet of the second STA.

For example, the CSI variation threshold may be predefined, or may be carried in a first sensing measurement request message for the first AP to request the first STA to measure the first link, where the first sensing measurement request message requests to perform a sensing measurement on the first link. The first sensing measurement request message is not described herein, and is described in detail below.

It may be understood that, when the variation amplitude of the first CSI measurement result is greater than the CSI variation threshold, it indicates that a current measurement environment obviously changes. In this case, a measurement frequency needs to be increased, to quickly obtain a fine-grained measurement result, and obtain valuable real-time data for a subsequent sensing task. Therefore, the first STA can trigger the supplementary measurement to measure the first link at a frequency greater than the first measurement frequency.

In a possible implementation, in an opportunistic measurement process, the first STA records a historical CSI measurement result of the first link. Each time CSI of the first link is measured, the first STA determines, based on the newly measured CSI and historical CSI, whether the variation amplitude of the first CSI measurement result is greater than the CSI variation threshold. If the variation amplitude is greater than the CSI variation threshold, the first STA determines that the supplementary measurement needs to be performed on the first link. For example, the variation amplitude of the first CSI measurement result is a variation amplitude of CSI newly measured by the first STA (that is, the first CSI measurement result) relative to an average value of historically recorded CSI. For example, CSI values at moments 1, 2, and 3 are respectively 1, 2.5, and 0.5, a CSI value at a moment 4 is 0.2, and an average value of CSI recorded at the moments 1, 2, and 3 is (1+2.5+0.5)/3. In this case, a variation amplitude of the CSI measured at the moment 4 is a variation amplitude of 0.2 relative to (1+2.5+0.5)/3.

It can be learned from the description in (2) that, to meet the measurement requirement of the first link, the first STA needs to perform the opportunistic measurement on the first link at the first measurement frequency, that is, the measurement requirement of the opportunistic measurement of the first link can be met only when the frequency at which the second STA sends the data packet is greater than or equal to the first measurement frequency. If the frequency at which the second STA sends the data packet is greater than the first measurement frequency, the first STA may choose to perform the CSI measurement only based on a part of data packets sent by the second STA, that is, the CSI measurement is performed on the data packet from the second STA at the first measurement frequency.

In an embodiment, when the variation amplitude of the first CSI measurement result is greater than the CSI variation threshold, the first STA needs to measure the first link at a frequency (for example, a frequency #A) greater than the first measurement frequency. If the frequency at which the second STA sends the data packet is not greater than the first measurement frequency, the first STA determines that the supplementary measurement needs to be performed on the first link. If the frequency at which the second STA sends the data packet is greater than or equal to the frequency #A, the first STA may continue to perform the opportunistic measurement on the first link at the frequency #A.

In another embodiment, the variation amplitude of the first CSI measurement result is greater than the CSI variation threshold, and the first STA considers that the supplementary measurement needs to be performed on the first link regardless of whether the frequency at which the second STA sends data packets is greater than the frequency #A.

Optionally, in this application, the second STA may determine whether the supplementary measurement needs to be performed on the first link. For example, because the second STA does not have a data packet that needs to be sent, or the second STA does not listen to a measurement report sent by the first STA to the AP, the second STA determines that the supplementary measurement needs to be performed on the first link.

The foregoing scenarios are merely examples of several scenarios in which the first STA and the second STA determine that the supplementary measurement needs to be performed on the first link. Actually, there may be more scenarios in which the supplementary measurement needs to be performed on the first link. This is not limited in this application.

For example, before S510, the method further includes: The first STA receives a first sensing measurement request message from a first AP, where the first sensing measurement request message includes first indication information, and the first indication information indicates the first STA to mainly control the supplementary measurement.

For example, that the first STA mainly controls the supplementary measurement of the first link means that the first STA determines whether the supplementary measurement needs to be performed on the first link.

For example, the first sensing measurement request message includes measurement link information, the measurement link information indicates N links, the N links include the first link, and N is a positive integer.

For example, the first sensing measurement request message includes at least one of the following parameters: a first measurement frequency, a second measurement frequency, a CSI variation threshold, and a first time interval, the first measurement frequency is a reference frequency for the first STA to perform the opportunistic measurement, the second measurement frequency is a reference frequency for the first STA to perform the supplementary measurement, and the first time interval is a time interval between two consecutive times of sending a measurement report message to the first AP when a variation amplitude of a CSI measurement result corresponding to the first link does not exceed the CSI variation threshold.

It should be understood that, unless otherwise specified, the measurement requirement parameters are applicable to the N links indicated by the measurement link information, and details are not described one by one.

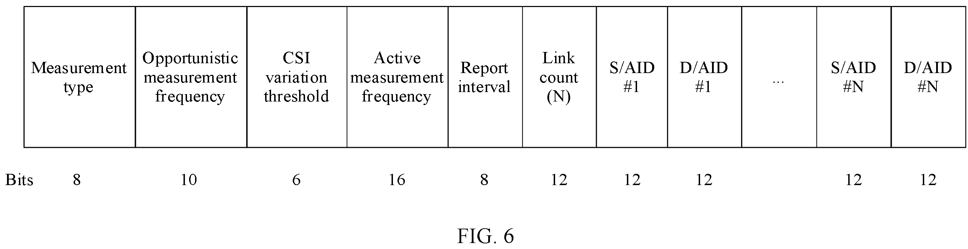

FIG. 6 is a diagram of a possible frame structure of a sensing measurement request message according to this application. The sensing measurement request message may be any sensing measurement message described in embodiments of this application. For ease of description, a frame corresponding to the sensing measurement request message shown in FIG. 6 is referred to as a sensing measurement request frame. The sensing measurement request frame may include but is not limited to the parameters included in the first sensing measurement request message described above.

It should be understood that a quantity of bits occupied by each field in the sensing measurement request frame shown in FIG. 6 is merely an example, and should not constitute a limitation on a frame structure or a frame length of the sensing measurement request frame provided in this application.

It should be further understood that a name of the sensing measurement request frame and a name of an included field that are shown in FIG. 6 are merely examples, and should not constitute a limitation on the sensing measurement request frame provided in this application.

As shown in FIG. 6, the sensing measurement request frame includes a measurement type (Measurement Type) field, an opportunistic measurement frequency (Opportunistic Measurement Frequency) field, a CSI variation threshold (CSI Variation Threshold) field, an active measurement frequency (Active Measurement Frequency) field, a report interval (Report Interval) field, a link count (Link Count) field, a source (Source) association identifier (association identification, AID) (S/AID) field, and a destination (Destination) association identifier (D/AID) field. The following describes the fields in detail.
(1) The measurement type field occupies 8 bits (bit), where 3 bits have specific indication meanings, and the remaining 5 bits are reserved bits. The following describes the 3 bits with specific meanings, and positions of the 1^{st} bit to the 3^{rd} bit in the 8 bits shown below are not limited.

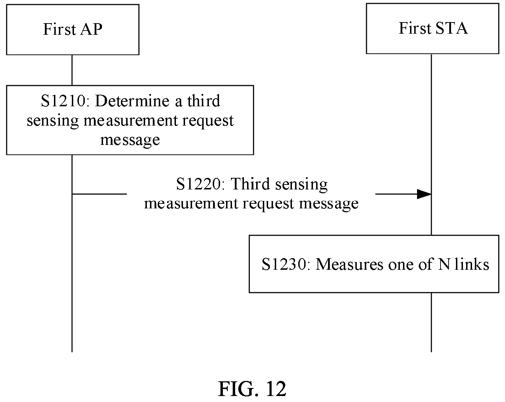

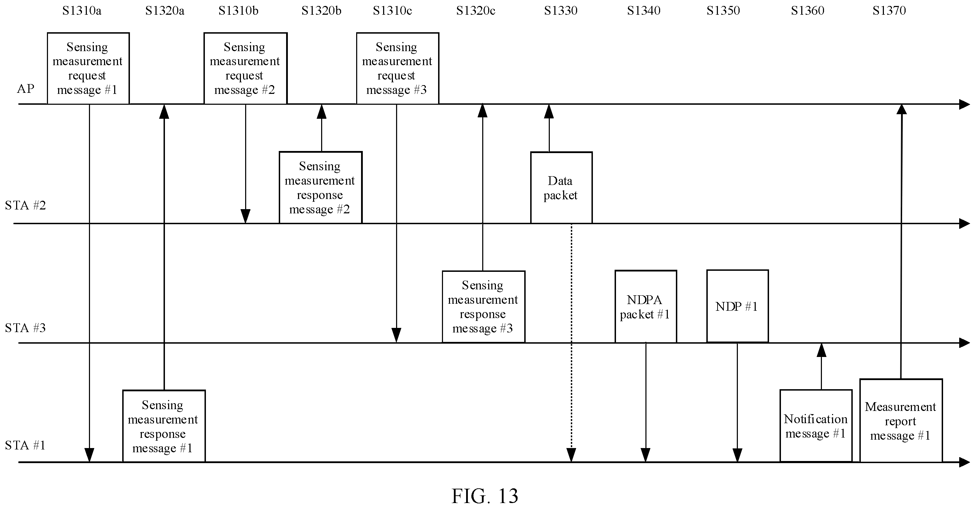

The 1^{st} bit indicates whether a node that receives the message needs to measure all links that use the node as a destination node in the link list. For example, if the bit is 0, it indicates that the node needs to measure all links that use the node as the destination node in the link list, and if the bit is 1, it indicates that only any link that uses the node as the destination node in the link list needs to be measured. For example, the link list includes two links: STA #2->STA #1 and STA #3->STA #1. In this case, if the bit is 1, it indicates that the STA #1 needs to measure only either of the two links. A solution corresponding to the field is described in detail in FIG. 12 and FIG. 13 below, and details are not described herein.

The 2^{nd} bit indicates a link direction. For example, if the bit is 0, it indicates that a bidirectional measurement needs to be performed on the link, that is, the measurement needs to be performed on both the receive end and the transmit end of the link; and if the bit is 1, it indicates that only a unidirectional measurement needs to be performed on the link, that is, the requirement can be met by needing only the destination node to measure the measurement packet sent by the source node.

The 3^{rd} bit indicates whether the node receiving the sensing measurement request frame is allowed to actively increase a measurement frequency for a supplementary measurement when finding a variation in a CSI measurement result. For example, when the bit is 1, it indicates allowing.
(2) The opportunistic measurement frequency field indicates a quantity of CSI measurements that need to be performed per second for each link under the opportunistic measurement condition (that is, a first measurement frequency is carried in the field). For example, if the field occupies 10 bits, the field indicates that a maximum quantity of CSI measurements that need to be performed per second is 1023. For example, when the field is 10 in decimal, it indicates that 10 CSI measurements need to be performed per second.
(3) The CSI variation threshold field indicates that when a CSI variation amplitude exceeds the threshold, a report or a further action needs to be performed to an AP (that is, the CSI variation threshold is carried in the field). For example, if the interval is 2%, when the field is 2 in decimal, it indicates that the CSI variation threshold is 4%.
(4) The active measurement frequency indicates a quantity of CSI measurements that need to be performed per second for each link when the measurement frequency is actively increased (that is, a second measurement frequency is carried in the field). For example, if the field occupies 16 bits, the field may indicate that a maximum quantity of CSI measurements that need to be performed per second is 65535. For example, when a value corresponding to the field is 100 in decimal, it indicates that 100 CSI measurements need to be performed per second.
(5) The report interval field indicates an interval at which a measurement report message needs to be sent when the CSI variation amplitude is less than the CSI variation threshold (that is, a first time interval is carried in the field). For example, in a unit of second, if the field occupies 8 bits, maximum duration of the first time interval is 255 seconds. For example, after sending a measurement report to the AP at a moment a, the STA sends the measurement report message to the AP again at a moment b after a period of time, where CSI variation amplitudes of the link corresponding to the moment a to the moment b do not exceed the CSI variation threshold, and a time interval between the moment b and the moment a is the first time interval.

It may be understood that, in the method 400, the STA #1 (that is, a measurement receive end) needs to report a measurement result to the AP each time after obtaining a CSI result through the measurement, to notify the AP of a specific measurement situation. In this way, the AP can determine whether to initiate a supplementary measurement procedure. However, in this embodiment, based on the report interval field and the CSI variation threshold field, the STA #1 may continuously perform a plurality of measurements, and perform feedback only when there is a variation in the measurement result, thereby greatly reducing a quantity of feedback messages. For example, based on the method 400, when 10 CSI measurements need to be performed per second in a monitoring scenario, feedback of measurement results needs to be performed 10 times per second. However, in this embodiment, if the environment does not obviously change, and the STA #1 does not find that the variation of the CSI exceeds the CSI variation threshold, the STA #1 may report that the environment does not change at a long interval (for example, the first time interval is 30 seconds). It can be learned that the quantity of feedback messages is reduced by 300 times. In the monitoring scenario, a case in which no action is performed in the environment is a most common case in the monitoring process. Optimization of this case can greatly reduce interference caused by sensing to data communication in the monitoring scenario.
(6) The link count field indicates a quantity of links included in the subsequent link list. For example, if the field occupies 8 bits, a maximum of 255 links can be indicated.
(7) The S/AID field indicates a source node identifier of a link, and the D/AID field indicates a destination node identifier of a link (that is, an S/AID field and a corresponding D/AID field carry information about a link in measurement link information). The AID identifier with all 0s or all 1s may indicate a special node. For example, when the S/AID field is all 0s, it may indicate any source node; and when the S/AID field is all 1s, it may indicate that the source node is an AP.

S520: The first STA sends a first notification message to a second STA, where the first notification message is for notifying the second STA to initiate the supplementary measurement of a first link. Correspondingly, the second STA receives the first notification message from the first STA, and determines that the supplementary measurement needs to be started.

For example, the first notification message includes timer information and measurement link information, the measurement link information indicates the first link, the timer information indicates first duration, and the first duration indicates the second STA to initiate the supplementary measurement of the first link after the first duration expires.

It may be understood that the first duration is timer duration, the first duration indicates the second STA to start a countdown after the second STA obtains the first duration, and when the timer is 0, the second STA starts to initiate the supplementary measurement of the first link.

For example, if a frequency for the supplementary measurement is a frequency #A, the first duration is determined based on the frequency #A. For example, if the frequency #A is 100 times per second, the first duration is 0.01 seconds.

For example, the frequency #A is determined based on an actual frequency required for the supplementary measurement of the first link or a second measurement frequency, and the second measurement frequency is a reference frequency for the first STA to perform the supplementary measurement.

S530: The second STA initiates the supplementary measurement of the first link.

It should be understood that the first STA notifies the second STA to initiate the supplementary measurement of the first link, that is, notifies the second STA to send a dedicated measurement packet for the supplementary measurement to the first STA, so that the first STA performs the supplementary measurement on the link #1 based on the dedicated measurement packet from the second STA.

In an embodiment, if the dedicated packet for the supplementary measurement is an NDP, because the second STA further needs to send an NDPA packet to the first STA before sending the NDP to the first STA, that the second STA initiates the supplementary measurement of the first link includes: The second STA sends the NDPA packet to the first STA at an interval of the first duration, to notify the first STA that the NDP is about to be sent. Correspondingly, the first STA receives the NDPA packet from the second STA at an interval of the first duration. The second STA sends the NDP to the first STA after sending the NDPA packet. Correspondingly, the first STA receives the NDP from the second STA after receiving the NDPA packet, and performs a CSI measurement based on the NDP to obtain a CSI measurement result.

It may be understood that the second STA sends the NDP to the first STA at a short interframe space (short interframe space, SIFS) after sending the NDPA packet. Because a sending interval between sending the NDPA packet and sending the NDP is fixed, the second STA also sends the NDPA packet to the first STA at an interval of the first duration.

It should be noted that the NDPA described in this application and the NDPA in the accompanying drawings are all sensing NDPAs (sensing NDPA), and details are not described in the following parts.

Optionally, the first STA may send a notification message #1 to notify the second STA that the packet for the supplementary measurement is successfully received, or may not send the notification message #1. For example, when the notification message #1 is not sent, the second STA considers by default that receiving succeeds, and a timer setting (that is, the first duration) remains unchanged, and continuously sends the packet for the supplementary measurement at an interval of the first duration.

It can be learned that, in the method 400, the STA #1 needs to report a measurement result after each measurement, to notify the AP of a specific measurement situation, so that the AP can determine whether to initiate the supplementary measurement procedure. However, in the foregoing technical solution, the first STA mainly controls the supplementary measurement of the first link, and the first STA does not need to send a corresponding CSI measurement result to the AP after each measurement of a data packet of the second STA. This can reduce channel occupation, and further reduce interference to data communication.

It should be noted that in each embodiment of this application, if there is no special explanation and logical conflict, the terms and/or descriptions between different embodiments are consistent and can be referenced to each other, and the technical features in different embodiments can be combined to form new embodiments according to their inherent logical relations.

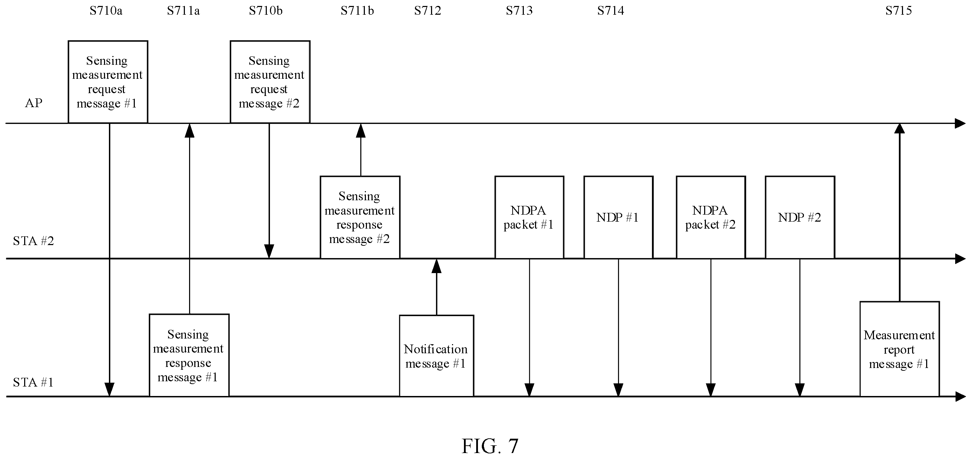

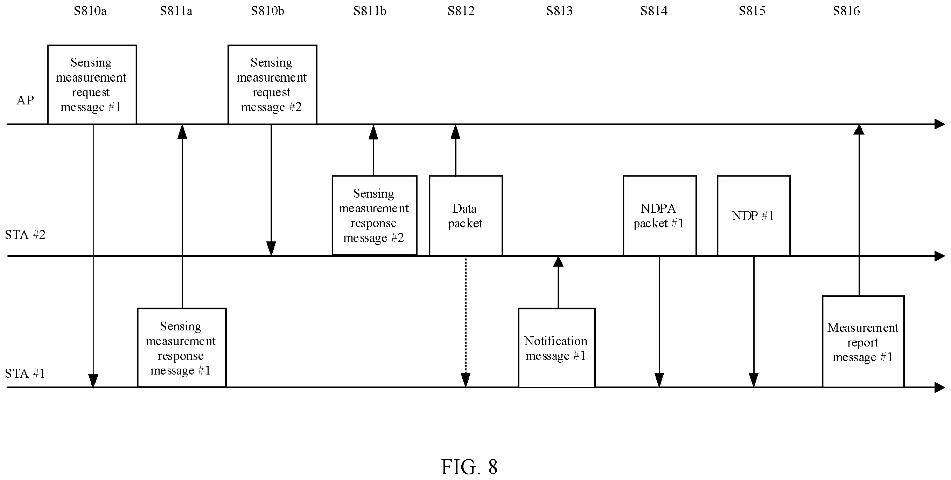

The following describes the method 500 by using an example with reference to FIG. 7 and FIG. 8 and a specific scenario.

FIG. 7 is a diagram of a method 700 for the supplementary measurement mainly controlled by the STA according to this application. FIG. 7 mainly describes a procedure for the supplementary measurement mainly controlled by the first STA in a scenario in which the first STA has not received a data packet from the second STA. The method mainly includes the following steps.

S710a: The AP determines that an opportunistic measurement needs to be performed on a link #1 (that is, an example of the first link), where the link #1 is a link that uses a STA #2 (that is, an example of the second STA) as a source node and a STA #1 (that is, an example of the first STA) as a destination node. Then, the AP initiates a measurement establishment procedure, and sends a sensing measurement request message #1 (that is, an example of the first sensing measurement request message) to the STA #1, to notify the STA #1 to participate in the opportunistic measurement of the link #1, and notify the STA #1 of related parameters of the opportunistic measurement and the supplementary measurement.

S711a: After receiving the sensing measurement request message #1, the STA #1 feeds back participation in the opportunistic measurement to the AP through a sensing measurement response (Sensing Measurement Response) message #1.

S710b: The AP sends a sensing measurement request message #2 to the STA #2, to notify the STA #2 to participate in the opportunistic measurement of the link #1, and notify the STA #2 of the related parameters of the opportunistic measurement and the supplementary measurement.

S711b: After receiving the sensing measurement request message #2, the STA #2 feeds back participation in the opportunistic measurement to the AP through a sensing measurement response message #2.

It should be noted that a sequence of S710a and S710b is not limited in this application.

S712: Because the STA #2, as a measurement transmit end, does not have a data packet that needs to be sent, at this time, the STA #1 determines that a supplementary measurement procedure needs to be initiated after not receiving any measurement packet for a period of time. Then, the STA #1 sends a notification message #1 (that is, an example of the first notification message) to the STA #2, to notify the STA #2 to initiate the supplementary measurement of the link #1. Correspondingly, the STA #2 receives the notification message #1 from the STA #1.

For example, the notification message #1 includes information about the link #1 and timer duration #1 (that is, an example of the first duration).

Optionally, in this procedure, to save power, the STA #1 may need to enter a sleep state, and the STA #1 may carry a sleep parameter of the STA #1 in the notification message #1. For example, the sleep parameter includes a time period in which the STA #1 subsequently enters sleep and a time period in which the STA #1 can receive a packet. The STA #2 determines, based on the sleep parameter of the STA #1 and in combination with a data sending requirement and a sleep requirement of the STA #2, sending time of a packet for the supplementary measurement.

S713: After receiving the notification message #1, the STA #2 determines that the supplementary measurement needs to be started, and the STA #2 performs a countdown after obtaining the timer duration #1. When the timer is 0, the STA #2 sends an NDPA #1 to the STA #1, to notify the STA #1 that an NDP for the supplementary measurement is about to be sent. Correspondingly, the STA #2 receives the NDPA #1 from the STA #1.

S714: The STA #2 sends an NDP #1 to the STA #1. Correspondingly, the STA #1 receives the NDP #1 from the STA #2, and performs a CSI measurement by using the NDP #1 to obtain a CSI measurement result.

It should be noted that, in S713 and S714, the NDP may be repeatedly sent for a plurality of times at a given measurement interval (that is, the timer duration #1). For example, in S714, the STA #2 starts a countdown after sending the NDP #1 to the STA #1. When the timer changes from the timer duration #1 to 0, the STA #2 continues to send an NDPA #2 to the STA #1, and continues to send an NDP #2 to the STA #1 after sending the NDPA #2.

S715: The STA #1 sends a measurement report message #1 to the AP, where the message includes related information about a measurement result of the supplementary measurement of the link #1.

It can be learned that, in a scenario in which the AP mainly controls the supplementary measurement of the link in the method 400, the procedure is complex. In the method 400, one supplementary measurement can be completed by exchanging five messages in total in step 5 to step 9. In this application, for the supplementary measurement mainly controlled by the STA, only two messages, namely, the NDPA and the NDP, need to be sent by the measurement transmit end STA #2, to complete one supplementary measurement. The procedure is simpler, greatly reduces a quantity of messages exchanged for the supplementary measurement, and reduces channel occupation, thereby reducing interference to data communication.

FIG. 8 is a diagram of another method 800 for the supplementary measurement mainly controlled by the STA according to this application. FIG. 8 mainly describes a procedure for the supplementary measurement mainly controlled by the STA in a scenario in which a variation amplitude of a CSI measurement result is greater than a CSI variation threshold. In this scenario, a measurement frequency needs to be increased in time, to quickly obtain a fine-grained measurement result, and obtain valuable real-time data for a subsequent sensing task. The method mainly includes the following steps.

S810a: The AP determines that an opportunistic measurement needs to be performed on a link #1 (that is, an example of the first link), where the link #1 is a link that uses a STA #2 (that is, an example of the second STA) as a source node and a STA #1 (that is, an example of the first STA) as a destination node. Then, the AP initiates a measurement establishment procedure, and sends a sensing measurement request message #1 (that is, an example of the first sensing measurement request message) to the STA #1, to notify the STA #1 to participate in the opportunistic measurement of the link #1, and notify related parameters of the opportunistic measurement and the supplementary measurement. In addition, the sensing measurement request message #1 from the AP includes indication information #1, and the indication information #1 indicates that when a variation amplitude of a CSI measurement result of the link #1 is greater than a CSI variation threshold, the measurement frequency is allowed to be increased. For example, the indication information #1 may be indicated by using the 3^{rd} bit of the measurement type in FIG. 6.

For example, the increased frequency for the supplementary measurement is determined based on an actual requirement of the supplementary measurement of the first link or a reference frequency (that is, an example of the second measurement frequency) configured by the AP for the STA #1 to perform the supplementary measurement.

S811a: After receiving the sensing measurement request message #1, the STA #1 feeds back participation in the opportunistic measurement to the AP through a sensing measurement response message #1.

S810b: The AP sends a sensing measurement request message #2 to the STA #2, to notify the STA #2 to participate in the opportunistic measurement of the link #1, and notify the STA #2 of the related parameters of the opportunistic measurement and the supplementary measurement.

S811b: After receiving the sensing measurement request message #2, the STA #2 feeds back participation in the opportunistic measurement to the AP through a sensing measurement response message #2.

It should be noted that a sequence of S810a and S810b is not limited in this application.

S812: The STA #2 normally sends a data packet to the AP, and the STA #1 listens to the data packet sent by the STA #2, and performs a CSI measurement based on the data packet to obtain a CSI measurement result of the link #1.

It may be understood that, in this step, the STA #1 performs the CSI measurement on the data packet from the STA #2 based on a reference frequency (that is, an example of the first measurement frequency) configured by the AP for the STA #1 to perform the opportunistic measurement on the link #1. That is, S812 needs to be repeated for a plurality of times.

S813: In a measurement process, the STA #1 finds that a CSI variation amplitude exceeds a CSI variation threshold, and the STA #1 determines, based on an indication of the indication information #1, that an additional measurement of finer-grained CSI are required. Then, the STA #1 sends a notification message #1 (that is, an example of the first notification message) to the STA #2, to notify the STA #2 to initiate the supplementary measurement of the link #1. Correspondingly, the STA #2 receives the notification message #1 from the STA #1.

For example, the notification message #1 includes information about the link #1 and timer duration #1 (that is, an example of the first duration).

S814: After receiving the notification message #1, the STA #2 determines that the supplementary measurement needs to be started, and the STA #2 performs a countdown after obtaining the timer duration #1. When the timer is 0, the STA #2 sends an NDPA packet #1 to the STA #1, to notify the STA #1 that an NDP for the supplementary measurement is about to be sent. Correspondingly, the STA #2 receives the NDPA packet #1 from the STA #1.

S815: The STA #2 sends an NDP #1 to the STA #1. Correspondingly, the STA #1 receives the NDP #1 from the STA #2, and performs a CSI measurement by using the NDP #1 to obtain a CSI measurement result.

For other descriptions of S814 and S815, refer to the descriptions in S714. Details are not described herein again.

S816: The STA #1 sends a measurement report message #1 to the AP, where the message indicates that a CSI variation of the link #1 has occurred (for example, indicates that a CSI variation amplitude is greater than the CSI variation threshold), and the measurement report message #1 further includes a fine-grained CSI measurement result measured in a variation process.

Optionally, in the method, after obtaining the CSI result by using one measurement packet, the STA #1 may notify the AP of the measurement result through one measurement report message, or may perform joint compression on CSI measurement results of a plurality of measurement packets, and transmit the CSI measurement results of the plurality of measurement packets through one measurement report message.

Compared with the method 400, the method 800 has the following advantages: First, in the method, after finding the CSI variation, the STA directly initiates the supplementary measurement, reducing a process of measurement reporting to the AP, and more quickly responding to the CSI variation, thereby effectively obtaining a fine-grained and real-time measurement result for use in a subsequent application. In addition, in a supplementary measurement procedure initiated by the STA, a notification message may be sent only once, and one supplementary measurement can be completed in a subsequent procedure through two messages NDPA and NDP. Compared with the method 400, the method 800 significantly reduces a quantity of messages exchanged in a single supplementary measurement, thereby reducing interference to data communication.

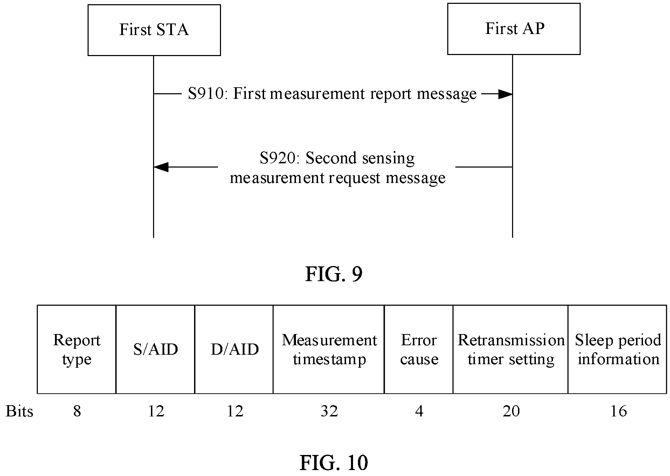

The following describes in detail another sensing method provided in this application. The method provides a mechanism for the STA to feed back a measurement error to the AP. This mechanism provides basic reliability guarantee for the link measurement. When a measurement link is faulty, the STA can notify the AP of the fault, and the AP replans the opportunistic measurement process. The following describes the method in detail with reference to FIG. 9.

FIG. 9 is a schematic flowchart of a sensing method 900 according to this application. The method 900 includes the following steps.

S910: A first STA sends a first measurement report message to a first AP, where the first measurement report message indicates that the first STA is incapable of measuring a first link, and the first link is a link that uses a second STA as a source node and the first STA as a destination node. Correspondingly, the first AP receives the first measurement report message from the first STA.

For example, the first measurement report message includes measurement link information and error report information, the measurement link information indicates the first link, and the error report information indicates that the first STA is incapable of measuring the first link.

For example, the first measurement report message further includes error cause information, and the error cause information indicates a specific cause for which the first STA is incapable of measuring the first link. For example, the error cause is that the peer end has no response, and the peer end herein is the STA #2.

FIG. 10 is a diagram of a possible frame structure of a measurement report message according to this application. The measurement report message may be any measurement report message described in this embodiment of this application. For ease of description, a frame corresponding to the measurement report message shown in FIG. 10 is referred to as a measurement report frame. The measurement report frame may include but is not limited to information included in the first measurement report message.

It should be understood that a quantity of bits occupied by each field in the measurement report frame shown in FIG. 10 is merely an example, and should not constitute a limitation on a frame structure or a frame length of the measurement report frame provided in this application.

It should be further understood that a name of the measurement report frame and a name of an included field that are shown in FIG. 10 are merely examples, and should not constitute a limitation on the measurement report frame provided in this application.

Optionally, the notification message and the measurement report message in all the embodiments of this application may use a same frame structure. Some fields are related to the notification message, and some fields are related to the measurement report message.

As shown in FIG. 10, the measurement report frame includes a report type (Report Type) field, an S/AID field, a D/AID field, a measurement timestamp (Timestamp) field, an error cause (Error Code) field, a retransmission timer setting (Timer Reset) field, and a sleep period information (Power Saving Information) field. The following describes the fields in detail.
(1) The report type field occupies 8 bits. Among these, 6 bits have specific indication meanings, and the remaining 2 bits are reserved bits. The following describes the 6 bits with specific meanings, and positions of the 1^{st} bit to the 6^{th} bit in the 8 bits are not limited in this application.

The 1^{st} bit indicates whether the CSI report is a normal CSI report (that is, the bit carries error report information). For example, if the bit is 0, it indicates that the CSI report is a normal CSI report; and if the bit is 1, it indicates that the CSI report is an error CSI report. For example, in S910, the bit is 1.

The 2^{nd} bit indicates whether a CSI variation amplitude is greater than a CSI variation threshold. For example, if the bit is 0, it indicates that the CSI variation amplitude is less than the CSI variation threshold; and if the bit is 1, it indicates that the CSI variation amplitude is greater than the CSI variation threshold. For example, in S816, the bit is 1.

The 3^{rd} bit indicates whether a node receiving the message needs to send a measurement packet. For example, if the bit is 0, it indicates that the node receiving the message does not need to send a measurement packet. For example, if the bit is 1, it indicates that the node receiving the message needs to send a measurement packet.

The 4^{th} bit indicates whether the node receiving the message needs to reset the retransmission timer. For example, if the bit is 0, it indicates that the node receiving the message does not need to reset the retransmission timer; and if the bit is 1, it indicates that the node receiving the message needs to reset the retransmission timer.

The 5^{th} bit indicates whether the message includes a specific CSI measurement result. For example, if the bit is 0, it indicates that the message does not include a specific CSI measurement result; and if the bit is 1, it indicates that the message includes a specific CSI measurement result. For example, in S910, the bit is 0.

The 6^{th} bit indicates whether the message includes sleep period information of a measurement receive end. For example, if the bit is 0, it indicates that the message does not include the sleep period information; and if the bit is 1, it indicates that the message includes the sleep period information.
(2) For the S/AID and the D/AID, refer to the description of (7) in FIG. 6. Details are not described herein again.
(3) The measurement timestamp field indicates a timestamp corresponding to the measurement result (that is, a time point at which the last CSI measurement is performed on the link). For example, the field is in a unit of millisecond.
(4) The error cause field indicates a specific cause of a CSI measurement error (that is, the field carries error cause information). For example, the field occupies 4 bits, 0000 indicates no error, 0001 indicates that a transmit power of the measurement receive end is insufficient, 0010 indicates that the measurement timer expires, 0011 indicates that power or computing capability of the measurement receive end is insufficient, 0100 indicates that the peer end has no response, and the remaining codes are reserved values.
(5) The retransmission timer setting field indicates the node receiving the message to reset the timer based on the timer duration indicated by the field (that is, the field carries the timer information described in S520). For example, in a unit of millisecond, if the field occupies 20 bits, maximum duration of the timer is 1048 seconds.
(6) The sleep period information field indicates the first 8 bits indicating the duration of the sleep from the current time, and the last 8 bits indicating the duration of normal receiving and sending after the sleep ends (that is, the field carries the sleep parameter described in S712). For example, the duration indicated by the field is in a unit of 100 milliseconds.

S920: The first STA receives a second sensing measurement request message from the first AP, where the second sensing measurement request message is for requesting the first STA to perform a sensing measurement on a second link, and the second link is a link that uses a third STA as a source node and the first STA as a destination node.

The description of the second sensing measurement request message is similar to that of the first sensing measurement request message in S510, and details are not described herein again.

In the method, a mechanism for feeding back an error to the AP is provided for the STA, thereby freeing the AP from a task that needs to continuously monitor a specific measurement procedure between STAs. This mechanism provides support for a STA autonomous measurement provided in another procedure in this application, and improves reliability of an opportunistic measurement. The following describes a possible complete implementation procedure of the method 900.

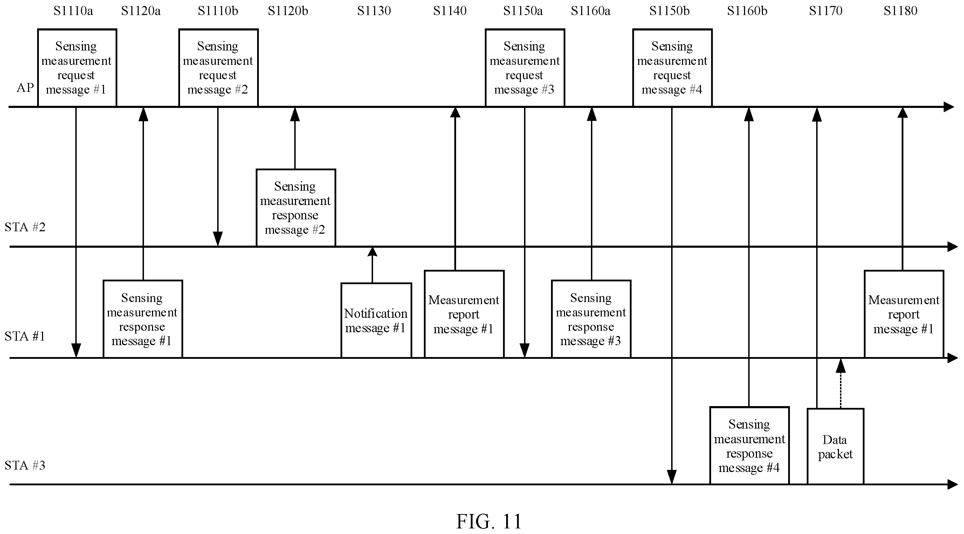

FIG. 11 is a diagram of a sensing method 1100 according to this application. The method mainly includes the following steps.

S1110a: An AP determines that an opportunistic measurement needs to be performed on a link #1 (that is, an example of the first link), where the link #1 is a link that uses a STA #2 (that is, an example of the second STA) as a source node and a STA #1 (that is, an example of the first STA) as a destination node. Then, the AP initiates a measurement establishment procedure, and sends a sensing measurement request message #1 (that is, an example of the first sensing measurement request message) to the STA #1, to notify the STA #1 to participate in the opportunistic measurement of the link #1, and notify related parameters of the opportunistic measurement and a supplementary measurement.

S1120b: After receiving the sensing measurement request message #1, the STA #1 sends a sensing measurement response message #1 to the AP to feed back participation in the opportunistic measurement.

S1110b: The AP sends a sensing measurement request message #2 to the STA #2, to notify the STA #2 to participate in the opportunistic measurement of the link #1, and notify the STA #2 of the related parameters of the opportunistic measurement and the supplementary measurement.

S1120b: After receiving the sensing measurement request message #2, the STA #2 feeds back participation in the opportunistic measurement to the AP through a sensing measurement response message #2.

It should be noted that a sequence of S1110a and S1110b is not limited in this application. S1130: As a measurement receive end, the STA #1 has not received a data packet sent by the STA #2. The STA #1 triggers a supplementary measurement procedure, and initiates a notification message #1 to the STA #2, to indicate the STA #2 to initiate the supplementary measurement procedure.

S1140: The STA #2 may fail to initiate the supplementary measurement due to a reason such as sleep or leaving a network. The STA #1 determines that the link #1 cannot be measured, and sends a measurement report message #1 to the AP, where the measurement report message #1 indicates that the CSI report is an error CSI report, and an error cause is that the peer end has no response. Correspondingly, the AP receives the measurement report message #1.

S1150a: The AP determines, based on information indicated by the measurement report message #1, to change the measurement link #1 to a measurement link #2, where the link #2 is a link that uses a STA #3 (that is, an example of the third STA) as a source node and the STA #1 (that is, an example of the first STA) as a destination node. Then, the AP initiates a measurement establishment procedure, and sends a sensing measurement request message #3 (that is, an example of the second sensing measurement request message) to the STA #1, to notify the STA #1 to participate in an opportunistic measurement of the link #2, and notify related parameters of the opportunistic measurement and a supplementary measurement.

S1160a: After receiving the sensing measurement request message #3, the STA #1 sends a sensing measurement response message #3 to the AP to feed back participation in the opportunistic measurement.

S1150b: The AP sends a sensing measurement request message #4 to the STA #3, to notify the STA #3 to participate in the opportunistic measurement of the link #2, and notify the STA #3 of the related parameters of the opportunistic measurement and the supplementary measurement.

S1120b: After receiving the sensing measurement request message #4, the STA #3 feeds back participation in the opportunistic measurement to the AP through a sensing measurement response message #4.

It should be noted that a sequence of S1150a and S1150b is not limited in this application.

S1170: If the STA #3 has a normal data packet to be sent to the AP, in this case, the STA #1 may correctly listen to a data packet from the STA #3, and perform a CSI measurement based on the data packet to obtain a CSI measurement result.

S1180: The STA #1 sends a measurement report message #2 to the AP, and correspondingly, the AP receives the measurement report message #2 from the STA #1.

For example, the STA #1 determines whether a variation amplitude of the measured CSI measurement result is greater than a CSI variation threshold. If the variation amplitude is greater than the CSI variation threshold, the STA #1 reports the current measurement result to the AP. If the variation amplitude is not greater than the CSI variation threshold, the STA #1 does not need to report the current measurement result temporarily. For specific reporting time, refer to the description of the report interval field in FIG. 6. Details are not described herein again.

The following describes in detail another sensing method provided in this application. In the sensing measurement request message shown in FIG. 6, the AP may request the STA to measure a plurality of links. In this method, the STA only needs to measure any link that uses the STA as a measurement receiving node in the link list included in the sensing measurement request message. The method may fully utilize an opportunistic measurement advantage. For example, the STA may perform a sensing measurement on a link on which the opportunistic measurement can be performed, to avoid channel occupation by the supplementary measurement. In addition, this method can further avoid repeated measurements of similar links. The following describes the method in detail with reference to FIG. 12.

FIG. 12 is a diagram of a sensing method 1200 according to this application. The method 1200 includes the following steps.

S1210: An first AP determines a third sensing measurement request message, where the third sensing measurement request message is for requesting a first STA to perform a sensing measurement on any one of N links, destination nodes of the N links are all the first STA, and N is a positive integer.

For example, the third sensing measurement request message includes measurement link information and measurement type information, the measurement link information indicates the N links, and the measurement type information indicates that the first STA needs to measure only any one of the N links.

For a frame structure of the third sensing measurement request message, refer to the description in FIG. 6. Details are not described herein again. For example, the 1^{st} bit in the measurement type field in FIG. 6 carries the measurement type information.

S1220: The first AP sends the third sensing measurement request message to the first STA. Correspondingly, the first STAreceives the third sensing measurement request message from the first AP.

S 1230: The first STA measures one of the N links.

For example, the link is a first link, and the first link is a link that uses a second STA as a source node and the first STA as a destination node. In this case, that the first STA measures one of the N links includes: The first STA receives a data packet from the second STA based on a first measurement frequency, where the first measurement frequency is a reference frequency for the first STA to perform an opportunistic measurement; and the first STA performs a CSI measurement based on the data packet of the second STA.

It may be understood that, that the first STA performs the CSI measurement based on the data packet of the second STA indicates that the first STA has successfully performed an opportunistic measurement on the first link.

In a possible scenario, the N links on which the first AP requests to perform the sensing measurement include a second link, and the second link is a link that uses a third STA as a source node and uses the first STA as a destination node. If the first STA has successfully measured the first link, the first STA does not need to measure another link. However, because the third STA does not know that the first STA only needs to measure any link that uses the first STA as a destination node, when the third STA has not sent a data packet, the third STA considers that the first STA is incapable of performing an opportunistic measurement on the second link, the third STA actively triggers a supplementary measurement. Specifically, the third STA sends a measurement packet #1 for the supplementary measurement to the first STA. Correspondingly, the first STA receives the measurement packet #1 from the third STA. Because the first STA has successfully measured the first link, the first STA sends a first notification message to the third STA, where the first notification message is for notifying the third STA that the supplementary measurement of the second link does not need to be initiated. Correspondingly, the third STA receives the first communication message from the first STA, and then the third STA stops initiating the supplementary measurement on the second link.

For example, a frame structure of the first notification message is shown in FIG. 10. The first STA may set the 3^{rd} bit in the report type field in FIG. 10 to 0, to indicate that a node (the third STA) receiving the message does not need to send, to the first STA, a measurement packet for the supplementary measurement.

For example, the first STA may set the 4^{th} bit in the report type field in FIG. 10 to 1, to indicate that a node (the third STA) receiving the message needs to reset a retransmission timer, and set a retransmission timer setting field in the message to all 0s, to indicate that duration of the timer is infinite, that is, the third STA does not need to send a measurement packet to the first STA.

It may be understood that, in an opportunistic measurement process, each node sends a data packet randomly. In this condition, in the method, the first STA is allowed to measure any one of a plurality of links, so that a probability of successful opportunistic measurements can be greatly improved, thereby reducing impact on data communication when a dedicated sensing measurement packet is used for the sensing measurement. In addition, in the method, for the third STA that has no data packet to be sent, the first STA may suppress, through the first notification message, the third STA from continuing to send a supplementary measurement message subsequently, thereby reducing sending of redundant measurement packets. The following describes a possible complete implementation procedure of the method 1200 by using an example.

FIG. 13 is a diagram of a sensing method 1300 according to this application. The method mainly includes the following steps.

S1310a: An AP determines that opportunistic measurements need to be performed on a link #1 (that is, an example of the first link) and a link #2 (that is, an example of the second link), where the link #1 is a link that uses a STA #2 (that is, an example of the second STA) as a source node and a STA #1 (that is, an example of the first STA) as a destination node, and the link #2 is a link that uses a STA #3 (that is, an example of the third STA) as a source node and the STA #1 as a destination node. Then, the AP initiates a measurement establishment procedure, and sends a sensing measurement request message #1 (that is, an example of the third sensing measurement request message) to the STA #1, to notify the STA #1 to participate in the opportunistic measurements of the link #1 and the link #2. In addition, the sensing measurement request message #1 indicates that the STA #1 may be allowed to measure either of the link #1 and the link #2.

S1320a: After receiving the sensing measurement request message #1, the STA #1 feeds back participation in the opportunistic measurement to the AP through a sensing measurement response message #1.

S1310a: The AP sends a sensing measurement request message #2 to the STA #2, to notify the STA #2 to participate in the opportunistic measurement of the link #1, and notify the STA #2 of the related parameters of the opportunistic measurement and the supplementary measurement.

S1320b: After receiving the sensing measurement request message #2, the STA #2 feeds back participation in the opportunistic measurement to the AP through a sensing measurement response message #1.

S1310c: The AP sends a sensing measurement request message #3 to the STA #3, to notify the STA #3 to participate in the opportunistic measurement of the link #2, and notify the STA #3 of the related parameters of the opportunistic measurement and the supplementary measurement.

S1320c: After receiving the sensing measurement request message #3, the STA #3 feeds back participation in the opportunistic measurement to the AP through a sensing measurement response message #3.

It should be noted that a sequence of S1310a, S1310b, and S1310c is not limited in this application.

S1330: If the STA #2 needs to send a data packet to the AP, the STA #2 continuously sends the data packet to the AP. In addition, the STA #1 listens to the data packet from the STA #2, and measures CSI based on the data packet.

For example, the STA #1 determines whether a variation amplitude of the measured CSI measurement result is greater than a CSI variation threshold. If the variation amplitude is greater than the CSI variation threshold, the STA #1 reports the current measurement result to the AP. If the variation amplitude is not greater than the CSI variation threshold, the STA #1 does not need to report the current measurement result temporarily.

S1340: The STA #3 does not send a data packet, and because the STA #3 does not know that the STA #1 needs to measure only one link using the STA #1 as a destination node, the STA #3 actively initiates the supplementary measurement on the link #2. For example, the STA #3 sends an NDPA packet #1 to the STA #1, to notify the STA #1 that the NDP for the supplementary measurement is about to be sent.

S1350: The STA #3 sends an NDP #1 to the STA #1, and correspondingly, the STA #1 receives the NDP #1 from the STA #3.

S1360: Since the STA #1 has measured the link #1, the STA #1 does not need to measure the link #2. Therefore, the STA #1 sends a notification message #1 to the STA #3, to notify the STA #3 that the supplementary measurement procedure does not need to be initiated again subsequently. Correspondingly, the STA #3 receives the notification message #1 from the STA #1, and the STA #3 no longer initiates the supplementary measurement on the link #2.

S1370: The STA #2 continues to send the data packet, and the STA #1 listens to the data packet sent by the STA #2, performs a CSI measurement based on the data packet, obtains a CSI measurement result, and sends a measurement report message #1 to the AP based on the measurement result.

For example, if the variation amplitude of the CSI measurement result corresponding to the link #1 is always not greater than the CSI variation threshold within a period of time, after a report interval (for example, the first time interval in S510) after the measurement report #1 is sent to the AP last time, the STA #1 notifies, through the measurement report message #1, the AP that the CSI variation amplitude of the link #1 is less than the CSI variation threshold.

This method utilizes an opportunistic measurement manner of selecting one from a plurality of options, and fully utilizes the opportunistic measurement advantage. Compared with the current opportunistic measurement solution that requires a fixed link transmit end and receive end, the method avoids repeated measurements of similar links and reduces redundant measurement packets.

Typical scenarios to which the solutions provided in this application are applicable include a security monitoring scenario and an action recognition scenario. In such scenario, if an environment changes slightly, that is, in most cases, a surrounding object does not move, CSI of a corresponding link does not change. In this case, to detect a change of a surrounding environment in time, the AP may need to monitor a link between STAs. This is mainly because the link between STAs is more likely to be affected by the surrounding environment. For a monitoring task, it is generally required to measure link CSI at relatively frequent time intervals, and compare a difference between the CSI and historical link CSI. For example, if the monitoring task needs to detect an environment change within 100 milliseconds, 10 CSI measurements need to be performed per second. However, because there are few environment changes in the monitoring task, a CSI variation occurs only when someone intrudes or the target performs an action. Therefore, to save measurement reporting resources, generally, the STA does not need to report when there is no CSI variation, that is, the STA may report to the AP that there is no CSI variation at a long time interval (for example, at an interval of 30 seconds) if the CSI value obtained through measurement remain unchanged. Therefore, in the monitoring task implemented in the opportunistic measurement manner, if the environment does not change, the STA and the AP may communicate with each other at a long interval. In this case, the system mainly uses the opportunistic measurement manner, and obtains the CSI by using a data packet normally sent on the measurement network, and few dedicated packets need to be sent for the sensing monitoring task (that is, only one interaction is performed every 30 seconds). Therefore, using this solution can greatly reduce occupation of air data transmission resources by the sensing monitoring task. In addition, because the CSI measurement node measures and compares the CSI at a higher rate (for example, 10 times per second), a change occurring in the environment can be quickly found, and when a CSI variation occurs, that is, an action occurs, the AP is immediately notified, and a next operation is performed, for example, a quantity of measurements is increased in time. Such a quick response can effectively capture the environment change, and lay a foundation for low-delay detection of subsequent intrusion alarm and action recognition.

It should be understood that sequence numbers of the foregoing processes do not mean execution sequences. The execution sequence of the processes should be determined based on functions and internal logic of the processes, and should not be construed as any limitation on implementation processes of embodiments of this application.

It should be further understood that, in some of the foregoing embodiments, a device in an existing network architecture is mainly used as an example for description. It should be understood that, a specific form of the device is not limited in embodiments of this application. For example, all devices that can implement a same function in the future are applicable to embodiments of this application.

It may be understood that, in the foregoing method embodiments, the methods and the operations implemented by the device (for example, the STA and the AP) may alternatively be implemented by a component (for example, a chip or a circuit) of the device.

The method provided in embodiments of this application is described above in detail with reference to FIG. 1 to FIG. 13. The foregoing method is mainly described from a perspective of interaction between the STAs and between the AP and the STA. It may be understood that, to achieve the foregoing functions, either of the AP and the STA includes a corresponding hardware structure and/or software module for implementing each function.

A person skilled in the art should be able to be aware that, in combination with the examples described in embodiments disclosed in this specification, units and algorithm steps can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

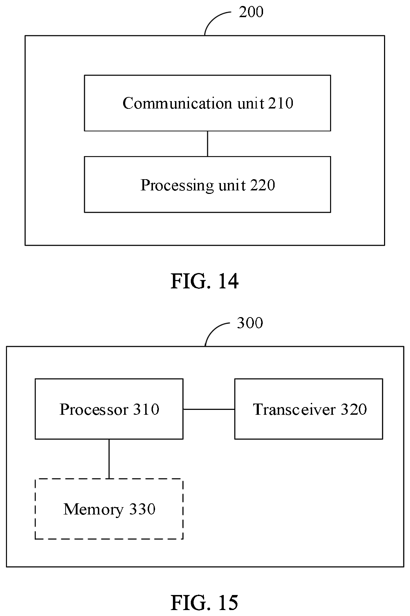

The following describes in detail communication apparatuses provided in embodiments of this application with reference to FIG. 14 and FIG. 15. It should be understood that descriptions of apparatus embodiments correspond to the descriptions of the method embodiments. Therefore, for content that is not described in detail, refer to the foregoing method embodiments. For brevity, some content is not described again. In embodiments of this application, the AP or the STA may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

The foregoing describes in detail the data transmission method provided in this application, and the following describes communication apparatuses provided in this application. In a possible implementation, the apparatus is configured to implement the steps or the procedures corresponding to the STA in the foregoing method embodiments. In another possible implementation, the apparatus is configured to implement the steps or the procedures corresponding to the AP in the foregoing method embodiments.

FIG. 14 is a block diagram of a communication apparatus 200 according to an embodiment of this application. As shown in FIG. 14, the apparatus 200 may include a communication unit 210 and a processing unit 220. The communication unit 210 may communicate with the outside, and the processing unit 220 is configured to process data. The communication unit 210 may also be referred to as a communication interface or a transceiver unit.

In a possible design, the apparatus 200 may implement steps or procedures performed by the AP in the foregoing method embodiments. The processing unit 220 is configured to perform processing-related operations of the AP in the foregoing method embodiments, and the communication unit 210 is configured to perform sending-related operations of the AP in the foregoing method embodiments.

In another possible design, the apparatus 200 may implement steps or procedures performed by the STA in the foregoing method embodiments. The communication unit 210 is configured to perform receiving-related operations of the STA in the foregoing method embodiments, and the processing unit 220 is configured to perform processing-related operations of the STA in the foregoing method embodiments.

It should be understood that the apparatus 200 herein is embodied in a form of a functional unit. The term "unit" herein may refer to an application-specific integrated circuit (application specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described functions. In an optional example, a person skilled in the art may understand that the apparatus 200 may be specifically the AP in the foregoing embodiments, and may be configured to perform the procedures and/or the steps corresponding to the AP in the foregoing method embodiments. Alternatively, the apparatus 200 may be specifically the STA in the foregoing embodiments, and may be configured to perform the procedures and/or the steps corresponding to the STA in the foregoing method embodiments. To avoid repetition, details are not described herein again.

The apparatus 200 in each of the foregoing solutions has a function of implementing the corresponding steps performed by the AP in the foregoing methods, or the apparatus 200 in each of the foregoing solutions has a function of implementing the corresponding steps performed by the STA in the foregoing methods. The function may be implemented by hardware, or may be implemented by hardware executing corresponding software. The hardware or software includes one or more modules corresponding to the foregoing function. For example, the communication unit may be replaced with a transceiver (for example, a sending unit of the communication unit may be replaced with a transmitter, and a receiving unit of the communication unit may be replaced with a receiver), and another unit such as the processing unit may be replaced with a processor, to separately perform the sending/receiving operations and the processing-related operations in the method embodiments.

In addition, alternatively, the communication unit may be a transceiver circuit (for example, may include a receiving circuit and a sending circuit), and the processing unit may be a processing circuit. In this embodiment of this application, the apparatus in FIG. 14 may be the STA or the AP in the foregoing embodiments, or may be a chip or a chip system, for example, a system on chip (system on chip, SoC). The communication unit may be an input/output circuit or a communication interface. The processing unit is a processor, a microprocessor, or an integrated circuit integrated on the chip. This is not limited herein.

FIG. 15 is a block diagram of a communication apparatus 300 according to an embodiment of this application. The apparatus 300 includes a processor 310 and a transceiver 320. The processor 310 and the transceiver 320 communicate with each other through an internal connection path, and the processor 310 is configured to execute instructions, to control the transceiver 320 to send a signal and/or receive a signal.

Optionally, the apparatus 300 may further include a memory 330. The memory 330, the processor 310, and the transceiver 320 communicate with each other through an internal connection path. The memory 330 is configured to store instructions, and the processor 310 may execute the instructions stored in the memory 330. In a possible implementation, the apparatus 300 is configured to implement procedures and steps corresponding to the AP in the foregoing method embodiments. In another possible implementation, the apparatus 300 is configured to implement the procedures and the steps corresponding to the STA in the foregoing method embodiments.

It should be understood that the apparatus 300 may be specifically the AP or the STA in the foregoing embodiments, or may be a chip or a chip system. Correspondingly, the transceiver 320 may be a transceiver circuit of the chip. This is not limited herein. Specifically, the apparatus 300 may be configured to perform the steps and/or the procedures corresponding to the AP or the STA in the foregoing method embodiments. Optionally, the memory 330 may include a read-only memory and a random access memory, and provide instructions and data for the processor. A part of the memory may further include a nonvolatile random access memory. For example, the memory may further store information of a device type. The processor 310 may be configured to execute the instructions stored in the memory. When the processor 310 executes the instructions stored in the memory, the processor 310 is configured to perform the steps and/or the procedures corresponding to the AP or the STA in the foregoing method embodiments.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, digital signal processing (digital signal processing, DSP), an ASIC, a field-programmable gate array (field-programmable gate array, FPGA) or another programmable logic device, a discrete gate or a transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor, or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. For example but not limitation, many forms of RAMs may be used, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these memories and any memory of another appropriate type.

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

In addition, this application further provides a computer-readable storage medium. The computer-readable storage medium stores computer instructions. When the computer instructions are run on a computer, operations and/or procedures performed by the AP or the STA in the method embodiments of this application are performed.

This application further provides a computer program product. The computer program product includes computer program code or instructions. When the computer program code or the instructions are run on a computer, operations and/or procedures performed by the AP or the STA in the method embodiments of this application are performed.

In addition, this application further provides a chip. The chip includes a processor. A memory configured to store a computer program is disposed independent of the chip. The processor is configured to execute the computer program stored in the memory, to perform an operation and/or processing performed by the AP or the STA in any method embodiment.

Further, the chip may include a communication interface. The communication interface may be an input/output interface, an interface circuit, or the like. Further, the chip may include the memory.

In addition, this application further provides a communication system, including the AP and the STA in embodiments of this application.

It should be further noted that the memory described herein is intended to include, but not limited to, these memories and any memory of another proper type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms. The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be further understood that ordinal numbers such as "first" and "second" in embodiments of this application are for distinguishing between a plurality of objects, but are not intended to limit a size, content, an order, a time sequence, priorities, importance of the plurality of objects, or the like.

It should be further understood that, in this application, both "when" and "if" mean that a network element performs corresponding processing in an objective situation, but do not constitute a limitation on time, do not require that the network element has a determining action during implementation, and do not mean other limitations either.

It should be further understood that in this application, "at least one" means one or more, and "a plurality of" means two or more. "At least one item (piece) of the following" or a similar expression thereof means any combination of these items, including any combination of singular items (pieces) or plural items (pieces). For example, at least one item (piece) of a, b, or c indicates a, b, c, a and b, a and c, b and c, or a and b and c.

It should be further understood that, unless otherwise specified, an expression similar to "an item includes one or more of the following: A, B, and C" in this application generally means that the item may be any one of the following: A; B; C; A and B; A and C; B and C; A, B, and C; A and A; A, A, and A; A, A, and B; A, A, and C; A, B, and B; A, C, and C; B and B; B, B, and B; B, B, and C; C and C; C, C, and C; and another combination of A, B and C. The foregoing uses three elements A, B, and C as an example to describe an optional case of the item. When an expression is "an item includes at least one of the following: A, B, ..., and X", in other words, more elements are included in the expression, a case to which the item is applicable may also be obtained according to the foregoing rule.

It should be further understood that, the term "and/or" in this specification describes only an association relationship between associated objects, and represents that three relationships may exist. For example, A and/or B may represent the following cases: A exists alone, both A and B exist, and B exists alone, where A and B may be singular or plural. The character "/" generally indicates an "or" relationship between the associated objects. For example, A/B indicates A or B.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A sensing method, comprising:
determining, by a first station STA, that a supplementary measurement needs to be performed on a first link, wherein the first link is a link that uses a second STA as a source node and the first STA as a destination node, and the supplementary measurement is a measurement manner of performing sensing by using a dedicated measurement packet; and
sending, by the first STA, a first notification message to the second STA, wherein the first notification message is for notifying the second STA to initiate the supplementary measurement of the first link.

2. The method according to claim 1, wherein determining, by the first STA, that the supplementary measurement needs to be performed on the first link comprises:
determining, by the first STA based on a first condition, that the supplementary measurement needs to be performed on the first link, wherein the first condition comprises:
the first STA is incapable of performing an opportunistic measurement on the first link, and the opportunistic measurement is a measurement manner of performing sensing by using a data packet;
or
a measurement requirement of the first link is unable to be met when the first STA performs an opportunistic measurement on the first link;
or
the first STA determines that a variation amplitude of a first channel state information CSI measurement result is greater than a predefined CSI variation threshold, and the first CSI measurement result is a CSI measurement result obtained by the first STA by measuring a received data packet of the second STA.

3. The method according to claim 2, wherein that the first STA is incapable of performing the opportunistic measurement on the first link comprises: the first STA has not received a data packet from the second STA, or the first STA is incapable of measuring a data packet from the second STA.

4. The method according to claim 2, wherein that the first STA determines that the measurement requirement of the first link is unable to be met when the first STA performs the opportunistic measurement on the first link comprises: a frequency at which the first STA receives a data packet of the second STA is less than a first measurement frequency, and the first measurement frequency is a reference frequency for the first STA to perform the opportunistic measurement.

5. The method according to claim 2, wherein that the first STA determines that the supplementary measurement needs to be performed on the first link when the first STA determines that the variation amplitude of the first CSI measurement result is greater than the CSI variation threshold comprises:
the first STA determines that the variation amplitude of the first CSI measurement result is greater than the CSI variation threshold, and needs to measure the first link at a first frequency greater than a first measurement frequency, and the first measurement frequency is a reference frequency for the first STA to perform the opportunistic measurement; and
when a frequency at which the first STA sends a data packet is less than the first measurement frequency, the first STA determines that the supplementary measurement needs to be performed on the first link.

6. The method according to any one of claims 1 to 5, wherein
the first notification message comprises timer information and measurement link information, the timer information indicates first duration, the measurement link information indicates the first link, and the first duration indicates the second STA to initiate the supplementary measurement of the first link after the first duration expires.

7. The method according to claim 6, wherein the dedicated measurement packet is a null data packet NDP, and the method further comprises:
receiving, by the first STA, a null data packet announcement NDPA packet from the second STA at an interval of the first duration; and
receiving, by the first STA, the NDP from the second STA after receiving the NDPA.

8. The method according to any one of claims 1 to 7, wherein the method further comprises:
receiving, by the first STA, a first sensing measurement request message from a first access point AP, wherein the first sensing measurement request message comprises first indication information, and the first indication information indicates the first STA to mainly control the supplementary measurement.

9. The method according to claim 8, wherein the first sensing measurement request message further comprises the measurement link information, and the measurement link information indicates the first link.

10. The method according to claim 8 or 9, wherein the first sensing measurement request message further comprises the first measurement frequency, a second measurement frequency, a channel state information CSI variation threshold, and a first time interval, the first measurement frequency is the reference frequency for the first STA to perform the opportunistic measurement, the second measurement frequency is a reference frequency for the first STA to perform the supplementary measurement, and the first time interval is a time interval between two consecutive times of sending a measurement report message to the first AP when a variation amplitude of a CSI measurement result corresponding to the first link does not exceed the CSI variation threshold.

11. A sensing method, comprising:
receiving, by a second station STA, a first notification message from a first STA, wherein the first notification message is for notifying the second STA to initiate a supplementary measurement of a first link, the first link is a link that uses the second STA as a source node and the first STA as a destination node, and the supplementary measurement is a measurement manner of performing sensing by using a dedicated measurement packet; and
initiating, by the second STA, the supplementary measurement of the first link.

12. The method according to claim 11, wherein
the first notification message comprises timer information and measurement link information, the timer information indicates first duration, the measurement link information indicates the first link, and the first duration indicates the second STA to initiate the supplementary measurement of the first link after the first duration expires.

13. The method according to claim 12, wherein the dedicated measurement packet is a null data packet NDP, and initiating, by the second STA, the supplementary measurement of the first link comprises:
sending, by the second STA, a null data packet announcement NDPA packet to the first STA at an interval of the first duration; and
sending, by the second STA, the NDP to the first STA after sending the NDPA.

14. A sensing method, comprising:
sending, by a first station STA, a first measurement report message to a first access point AP, wherein the first measurement report message indicates that the first STA is incapable of measuring a first link, and the first link is a link that uses a second STA as a source node and the first STA as a destination node; and
receiving, by the first STA, a second sensing measurement request message from the first AP, wherein the second sensing measurement request message is for requesting the first STA to perform a sensing measurement on a second link, and the second link is a link that uses a third STA as a source node and the first STA as a destination node.

15. The method according to claim 14, wherein the first measurement report message comprises measurement link information and error report information, the measurement link information indicates the first link, and the error report information indicates that the first STA is incapable of measuring the first link.

16. The method according to claim 14 or 15, wherein the first measurement report message further comprises error cause information, and the error cause information indicates an error cause for which the first STA is incapable of measuring the first link.

17. The method according to claim 16, wherein the error cause is that the second STA has no response.

18. The method according to any one of claims 14 to 17, wherein that the first STA performs the sensing measurement on the second link comprises performing an opportunistic measurement on the second link, and the opportunistic measurement is a measurement manner of performing sensing by using a data packet.

19. The method according to claim 18, wherein the method further comprises:
determining, by the first STA, that a supplementary measurement needs to be performed on the second link; and
sending, by the first STA, a second notification message to the third STA, wherein the second notification message is for notifying the third STA to initiate the supplementary measurement of the second link, and the supplementary measurement is a measurement manner of performing sensing by using a dedicated measurement packet.

20. The method according to any one of claims 14 to 19, wherein the second sensing measurement request message comprises measurement link information, and the measurement link information indicates the second link.

21. The method according to any one of claims 14 to 20, wherein the second sensing measurement request message further comprises a measurement parameter for the first STA to perform the sensing measurement on the second link.

22. A sensing method, comprising:
receiving, by a first access point AP, a first measurement report message from a first station STA, wherein the first measurement report message indicates that the first STA is incapable of measuring a first link, and the first link is a link that uses a second STA as a source node and the first STA as a destination node; and
sending, by the first AP, a second sensing measurement request message to the first STA, wherein the second sensing measurement request message is for requesting the first STA to perform a sensing measurement on a second link, and the second link is a link that uses a third STA as a source node and the first STA as a destination node.

23. The method according to claim 22, wherein the first measurement report message further comprises measurement link information and error report information, the measurement link information indicates the first link, and the error report information indicates that the first STA is incapable of measuring the first link.

24. The method according to claim 22 or 23, wherein the first measurement report message further comprises error cause information, and the error cause information indicates an error cause for which the first STA is incapable of measuring the first link.

25. The method according to claim 24, wherein the error cause is that the second STA has no response.

26. The method according to claim 22 or 25, wherein the second sensing measurement request message comprises measurement link information, and the measurement link information indicates the second link.

27. The method according to claim 22 or 26, wherein the second sensing measurement request message further comprises measurement parameters for the first STA to perform an opportunistic measurement and a supplementary measurement on the second link.

28. A sensing method, comprising:
receiving, by a first station STA, a third sensing measurement request message from a first access point AP, wherein the third sensing measurement request message is for requesting the first STA to perform a sensing measurement on any one of N links, destination nodes of the N links are all the first STA, and N is an integer greater than 1; and
measuring, by the first STA, one of the N links.

29. The method according to claim 28, wherein
the third sensing measurement request message comprises measurement link information and measurement type information, the measurement link information indicates the N links, and the measurement type information indicates that the first STA needs to measure only any one of the N links.

30. The method according to claim 28 or 29, wherein the one link is a first link, and the first link is a link that uses a second STA as a source node; and
measuring, by the first STA, the one of the N links comprises:
receiving, by the first STA, a data packet from the second STA based on a first measurement frequency, wherein the first measurement frequency is a reference frequency for the first STA to perform an opportunistic measurement, and the opportunistic measurement is a measurement manner of performing sensing by using a data packet; and
performing, by the first STA, a channel state information CSI measurement based on the data packet of the second STA.

31. The method according to claim 30, wherein the N links comprise a second link, the second link is a link that uses a third STA as a source node, and the method further comprises:
receiving, by the first STA, a first dedicated measurement packet from the third STA, wherein the first dedicated measurement packet is a measurement packet used for a supplementary measurement, and the first dedicated measurement packet is used by the first STA to perform the supplementary measurement on the second link; and
sending, by the first STA, a first notification message to the third STA, wherein the first notification message is for notifying the third STA that the supplementary measurement of the second link does not need to be initiated.

32. A sensing method, comprising:
determining, by a first access point AP, a third sensing measurement request message, wherein the third sensing measurement request message is for requesting a first station STA to perform a sensing measurement on any one of N links, destination nodes of the N links are all the first STA, and N is an integer greater than 1; and
sending, by the first AP, the third sensing measurement request message to the first STA.

33. The method according to claim 32, wherein
the third sensing measurement request message comprises measurement link information and measurement type information, the measurement link information indicates the N links, and the measurement type information indicates that the first STA needs to measure only any one of the N links.

34. A communication apparatus, comprising a module or unit configured to perform the method according to any one of claims 1 to 10, or comprising a module or unit configured to perform the method according to any one of claims 11 to 13, or comprising a module or unit configured to perform the method according to any one of claims 14 to 21, or comprising a module or unit configured to perform the method according to any one of claims 22 to 27, or comprising a module or unit configured to perform the method according to any one of claims 28 to 31, or comprising a module or unit configured to perform the method according to claim 32 or 33.

35. A communication apparatus, comprising at least one processor and a communication interface, wherein the communication interface is configured to input and/or output a signal, and the at least one processor is configured to execute a computer program stored in a memory, to enable the communication apparatus to implement the method according to any one of claims 1 to 10, or implement the method according to any one of claims 11 to 13, or implement the method according to any one of claims 14 to 21, or implement the method according to any one of claims 22 to 27, or implement the method according to any one of claims 28 to 31, or implement the method according to claim 32 or 33.

36. A processing apparatus, comprising a processor, wherein the processor is configured to execute a computer program stored in a memory, to enable the apparatus to implement the method according to any one of claims 1 to 10, or implement the method according to any one of claims 11 to 13, or implement the method according to any one of claims 14 to 21, or implement the method according to any one of claims 22 to 27, or implement the method according to any one of claims 28 to 31, or implement the method according to claim 32 or 33.

37. A processing apparatus, comprising:
a memory, configured to store a computer program; and
a processor, configured to invoke the computer program from the memory and run the computer program, to enable the apparatus to implement the method according to any one of claims 1 to 10, or implement the method according to any one of claims 11 to 13, or implement the method according to any one of claims 14 to 21, or implement the method according to any one of claims 22 to 27, or implement the method according to any one of claims 28 to 31, or implement the method according to claim 32 or 33.

38. A computer-readable storage medium, comprising a computer program, wherein when the computer program is run on a computer, the computer is enabled to perform the method according to any one of claims 1 to 10, or perform the method according to any one of claims 11 to 13, or perform the method according to any one of claims 14 to 21, or perform the method according to any one of claims 22 to 27, or perform the method according to any one of claims 28 to 31, or perform the method according to claim 32 or 33.

39. A computer program product, wherein the computer program product comprises a computer program, and when the computer program is run on a computer, the computer is enabled to perform the method according to any one of claims 1 to 10, or perform the method according to any one of claims 11 to 13, or perform the method according to any one of claims 14 to 21, or perform the method according to any one of claims 22 to 27, or perform the method according to any one of claims 28 to 31, or perform the method according to claim 32 or 33.
